# EUROPÄISCHE PATENTSCHRIFT

(11) **EP 3 173 264 B1**
(45) Veröffentlichungstag und Bekanntmachung des Hinweises auf die Patenterteilung: **26.02.2020**
(21) Anmeldenummer: 16197739.2
(22) Anmeldetag: 08.11.2016
(51) Int. Cl.: B60D 1/06, B60D 1/62

(54) **ANHÄNGEKUPPLUNG**
TRAILER COUPLING
ATTELAGE

(30) Priorität: 24.11.2015 DE 102015120325
(43) Veröffentlichungstag der Anmeldung: 31.05.2017
(73) Patentinhaber: ACPS Automotive GmbH, 71706 Markgröningen (DE)
(72) Erfinder: Kadnikov, Aleksej, 71229 Leonberg (DE); Gentner, Wolfgang, 71711 Steinheim (DE); Rimmelspacher, Bernhard, 76287 Rheinstetten (DE)
(74) Vertreter: Hoeger, Stellrecht & Partner Patentanwälte mbB

(56) Entgegenhaltungen:
- EP-A1- 2 511 109
- EP-A1- 2 719 555
- DE-A1-102010 045 519

## Beschreibung

Die Erfindung betrifft eine Anhängekupplung für Kraftfahrzeuge, umfassend eine an einem Heckbereich des Kraftfahrzeugs angeordnete Trägereinheit, einen Kugelhals, der an einem ersten Ende eine Kupplungskugel trägt und der mit einem zweiten Ende an der Trägereinheit gehalten ist, eine um eine Mittelachse der Kupplungskugel umlaufende Nut, in der ein Mitnahmering drehbar um die Mittelachse geführt ist, und eine in der Kupplungskugel angeordnete Drehposition des Mitnahmerings erfassende Sensoreinheit.

Derartige Anhängekupplungen sind aus dem Stand der Technik bekannt. Die EP 2 511 109 A1 offenbart eine Anhängekupplung gemäß dem Oberbegriff des Anspruchs 1

Der Erfindung liegt daher die Aufgabe zugrunde, eine Anhängekupplung der gattungsgemäßen Art derart zu verbessern, dass der Mitnahmering und die Sensoreinheit möglichst raumsparend in der Kupplungskugel integriert sind. Diese Aufgabe wird bei einer Anhängekupplung der eingangs beschriebenen Art dadurch gelöst, dass die Sensoreinheit in einem Kugelkörper der Kupplungskugel eine radial innerhalb der Nut angeordneten Ausnehmung für die Sensoreinheit vorgesehen ist, und dass die Ausnehmung in Richtung parallel zu der Mittelachse der Kupplungskugel dieselbe oder eine geringere Ausdehnung aufweist als die Nut.

Somit können der Mitnahmering und die Sensoreinheit einfach und raumsparend integriert werden und dennoch kann der Kugelkörper sehr stabil ausgeführt werden.

Ferner ist vorzugsweise vorgesehen, dass die Ausnehmung sich in dem Kugelkörper quer zur Mittelachse erstreckt.

Besonders einfach lässt sich die Ausnehmung dann realisieren, wenn die Ausnehmung im Anschluss an die Nut in den Kugelkörper eindringt.

Um die Sensoreinheit vorteilhaft mit einer elektrischen Leitung verbinden zu können, ist vorzugsweise vorgesehen, dass die Ausnehmung in einen die Kupplungskugel durchsetzenden Leitungskanal übergeht.

Vorzugsweise ist dabei der Leitungskanal so ausgebildet, dass er einen innerhalb des Kugelkörpers ungefähr parallel zur Mittelachse verlaufenden Kanalabschnitt aufweist.

Unter einem ungefähr parallelen Verlauf des Kanalabschnitts ist dabei zu verstehen, dass die Mittelachse des Kugelabschnitts mit der Mittelachse der Kupplungskugel einen Winkel von weniger als 15° einschließt.

Hinsichtlich des Verlaufs des Leitungskanals wurden bislang ebenfalls keine näheren Angaben gemacht. So sieht eine besonders vorteilhafte Lösung vor, dass der Leitungskanal zumindest einen Teil der Kupplungskugel, einen Kugelansatz und einen Teilbereich des Kugelhalses durchsetzt.

Ferner ist zweckmäßigerweise vorgesehen, dass der Leitungskanal im Bereich des Kugelhalses eine Zugangsöffnung aufweist.

Hinsichtlich der Ausbildung der Kupplungskugel wurden bislang keine näheren Angaben gemacht.

Zum Vorsehen der Nut und der Ausnehmung für die Sensoreinheit ist es vorteilhaft, die Kupplungskugel als geteilte Kugel auszuführen, wobei beispielsweise eine Teilung durch eine parallel zu einer Äquatorebene verlaufende Teilungsebene erfolgt.

Andererseits ist es für die Stabilität der Kupplungskugel von Vorteil, wenn die Kupplungskugel einstückig ausgebildet ist und somit der Aufwand der Verbindung zweier Teile der Kupplungskugel entfallen kann.

Um die Drehstellungen des Mitnahmerings relativ zur Kupplungskugel erfassen zu können, sieht alternativ oder ergänzend zu den vorstehend beschriebenen Lösungen eine besonders zweckmäßige Lösung vor, dass der Mitnahmering mit einer Abtaststruktur versehen ist, die von der im Kugelkörper angeordneten Sensoreinheit abtastbar ist.

Eine besonders einfach realisierbare Lösung sieht dabei vor, dass die Abtaststruktur an einem Trägerkörper des Mitnahmerings angeordnet ist.

Die Abtaststruktur ist dabei vorzugsweise so ausgebildet, dass diese aufeinanderfolgende Bereiche aufweist, die ein Magnetfeld unterschiedlich stark beeinflussen.

Dies könnte durch Bereiche mit unterschiedlich starker Abschirmwirkung für Magnetfelder realisiert werden.

Vorzugsweise lassen sich derartige, ein Magnetfeld unterschiedlich stark beeinflussende Bereiche dadurch realisieren, dass diese Bereiche unterschiedlich stark magnetisierbar sind.

Eine einfache Möglichkeit einer Abtaststruktur sieht vor, dass die Abtaststruktur als alternierende, beispielsweise in der Umlaufrichtung periodische, Struktur ausgebildet ist, die insbesondere um die Mittelachse in Umlaufrichtung aufeinanderfolgende Materialstege und Materialsteglücken aufweist, so dass einerseits die Materialstege und andererseits die Materialsteglücken von der Sensoreinheit detektiert werden können.

Insbesondere dann, wenn es darum geht, ein Magnetfeld unterschiedlich stark zu beeinflussen, sind derartige Materialstege und Materialsteglücken einfache diese Erfordernisse erfüllende Lösungen.

Eine besonders einfache Möglichkeit der Realisierung von Materialstegen und Materialsteglücken zieht vor, dass die Abtaststruktur um die Mittelachse umlaufend aufeinanderfolgende Stege und Aussparungen aufweist, so dass beispielsweise die Stege und die Aussparungen beispielsweise durch eine in Umlaufrichtung sich erstreckende Lochreihe mit zwischen den einzelnen Löchern gebildeten Stegen realisiert werden können.

Hinsichtlich der relativen Anordnung zwischen der Sensoreinheit und der Abtaststruktur wurden im Zusammenhang mit den bisherigen Ausführungen keine näheren Angaben gemacht.

So sieht eine vorteilhafte Lösung vor, dass die Sensoreinheit bezogen auf die Mittelachse radial innerhalb der Abtaststruktur in dem Kugelkörper angeordnet ist.

Hinsichtlich einer raumsparenden Bauweise hat es sich dabei als besonders zweckmäßig erwiesen, wenn die Sensoreinheit eine mit einer Komponente radial zur Mittelachse verlaufende und auf die Abtaststruktur gerichtete Detektionsrichtung aufweist, so dass sich die Sensoreinheit vorzugsweise einfach in die Kupplungskugel integrieren lässt.

Hinsichtlich des für die Abtaststruktur verwendeten Materials werden bislang keine näheren Angaben gemacht.

So sieht eine besonders einfach herzustellende Lösung vor, dass die Abtaststruktur aus Metall, insbesondere aus magnetisierbarem Metall, hergestellt ist.

Eine besonders vorteilhafte Lösung sieht vor, dass die Sensoreinheit zur Abtastung der Drehstellungen des Mitnahmerings eine magnetisch vorgespannte Sensoranordnung, bei welcher insbesondere mindestens ein Sensor von einem zur magnetischen Vorspannung Magnetfeld durchflutet ist, aufweist, mit welcher die Drehstellungen einer Abtaststruktur des Mitnahmerings erfasst werden, die in definierten Abständen aufeinanderfolgend angeordnete erste und zweite Bereiche aufweist, wobei die ersten und zweiten Bereiche bei Wechselwirkung mit einem dem zur magnetischen Vorspannung dienenden Magnetfeld der Sensoreinheit dieses Magnetfeld unterschiedlich stark beeinflussen.

Dabei ist vorzugsweise vorgesehen, dass die ersten und zweiten Bereiche der Abtaststruktur an dem Trägerkörper ausgebildet sind.

Insbesondere ist dabei vorgesehen, dass die ersten und zweiten Bereiche der Abtaststruktur einstückig an den Trägerkörper angeformt sind.

Eine weitere vorteilhafte Lösung sieht vor, dass der Mitnahmering einen Trägerkörper aufweist und dass an dem Trägerkörper Mitnahmeelemente gehalten sind, die über eine durch die Kupplungsoberfläche definierte geometrische Kugelfläche radial zur Mittelachse nach außen überstehen.

Der Vorteil der erfindungsgemäßen Lösung ist darin zu sehen, dass durch die Ausbildung des Mitnahmerings aus einem Trägerkörper, an dem die Mitnahmeelemente gehalten sind, sich der Mitnahmering einfach herstellen und montieren lässt.

Besonders vorteilhaft ist es dabei, wenn die Mitnahmeelemente radial zur Mittelachse elastisch bewegbare Mitnahmeflächen aufweisen, welche dann in der Lage sind, eine kraftschlüssige und/oder formschlüssige Verbindung mit einem an der Kupplungskugel angreifenden Element, beispielsweise einer Zugkugelkupplung, herzustellen.

Dabei können entweder die Mitnahmeelemente selbst in radialer Richtung zur Mittelachse volumendeformierbar sein oder die Mitnahmeelemente sind selbst im Wesentlichen volumeninvariant elastisch deformierbar und/oder relativ zum Trägerkörper und/oder radial zur Mittelachse elastisch bewegbar.

Eine besonders günstige Lösung sieht vor, dass die Mitnahmeelemente ausgehend von dem Trägerkörper sich mit einer in radialer Richtung zur Mittelachse verlaufenden Komponente erstrecken und somit insbesondere selbst radial zur Mittelachse relativ zum Trägerkörper bewegbar sind.

Eine besonders vorteilhafte Lösung sieht vor, dass die Mitnahmeelemente Zungen umfassen und dass die Zungen einen mit dem Trägerkörper verbundenen Zungenansatz und ein insbesondere freies, d.h. nicht am Trägerkörper fixiertes, Zungenende aufweisen, zu welchem sich die Zungen ausgehend von dem Zungenansatz erstrecken.

Derartige Zungen sind vorzugsweise aus einem Flachmaterial oder als Flachmaterial hergestellt.

Durch das Vorsehen von Zungen ist eine federelastische Bewegbarkeit der Mitnahmeelemente relativ zum Trägerkörper in einfacher Weise realisierbar.

Ferner ist vorzugsweise vorgesehen, dass die Zungen so gebogen sind, dass das Zungenende in der Nut liegt, um zu verhindern, dass sich das Zungenende an einem an der Kupplungskugel angreifenden Element, beispielsweise der Zugkugelkupplung, verhakt und beim Abnehmen des Elements beschädigt wird.

Ferner ist es auch vorteilhaft, wenn der Zungenansatz der Zungen in der Nut liegt, da dann die Zungen mit ihren außerhalb der Nut liegenden Bereichen einerseits eine ausreichende Federelastizität haben und andererseits der Trägerkörper in der Nut geschützt angeordnet ist.

Eine vorteilhafte Lösung sieht dabei vor, dass die Zungen C-förmig gebogen sind, wobei die C-förmige Biegung vorzugsweise in einer durch die Mittelachse hindurchlaufenden Radialebene liegt.

Als besonders vorteilhaft hat es sich erwiesen, wenn die Zungen einen radial zur Mittelachse konvex nach außen gewölbten Mitnahmebereich aufweisen, der über die geometrische Kugelfläche übersteht.

Mit diesem Mitnahmebereich ist somit in einfacher Weise ein Kontakt mit dem an der Kupplungskugel angreifenden Element realisierbar, der zu einer kraftschlüssigen und/oder formschlüssigen Mitnahme des Mitnahmerings mit dem an der Kupplungskugel eingreifenden Element führt.

Insbesondere ist dabei vorgesehen, dass der konvex gewölbte Mitnahmebereich zumindest teilweise radial zur Mittelachse nach außen über die Nut übersteht.

Insbesondere sind die Mitnahmeelemente aus demselben Material wie der Trägerkörper hergestellt.

Somit weisen die Mitnahmeelemente einerseits eine hohe Verschleißfestigkeit auf und lassen sich andererseits in einfacher Weise als federelastische, insbesondere eine ausreichend große Federkraft aufweisende Elemente ausbilden, mit denen sich eine dauerhafte kraftschlüssige und/oder formschlüssige Verbindung zu einem an der Kupplungskugel angreifenden Element, beispielsweise einer Zugkugelkupplung, herstellen lässt.

Hinsichtlich der Ausbildung des Trägerkörpers wurden im Zusammenhang mit den bislang erläuterten Ausführungsformen keine näheren Angaben gemacht.

So sieht eine vorteilhafte Lösung vor, dass der Trägerkörper als um die Mittelachse umlaufender Ringkörper ausgebildet ist.

Dabei könnte der Trägerkörper kein geschlossener Ringkörper, sondern ein offener Ringkörper sein, so dass dadurch die Montage erleichtert wäre.

Hinsichtlich der Stabilität der Führung des Mitnahmerings hat es sich jedoch als vorteilhaft erwiesen, wenn der Trägerkörper im betriebsfähig montiertem Zustand als in einer Umlaufrichtung um die Mittelachse geschlossen umlaufender Ringkörper ausgebildet ist.

Zur Montage eines derartigen Trägerkörpers ist es jedoch zweckmäßig, wenn der Trägerkörper als zwei Ringenden aufweisender, durch einen Verschluss in der Umlaufrichtung schließbarer Ringkörper ausgebildet ist.

Hinsichtlich der Verbindung zwischen den Mitnahmeelementen und dem Trägerkörper wurden bislang keine näheren Angaben gemacht.

Insbesondere lässt sich bei den Mitnahmeelementen die elastische Bewegbarkeit dadurch realisieren, dass die Mitnahmeelemente aus einem elastisch deformierbaren Flachmaterial, insbesondere einem metallischen elastisch deformierbaren Flachmaterial hergestellt sind.

So sieht eine vorteilhafte Lösung vor, dass die Mitnahmeelemente an den Trägerkörper beispielsweise stoffschlüssig oder formschlüssig angeformt sind.

Dabei könnten die Mitnahmeelemente selbst als aus einem sich von dem Trägerkörper unterscheidenden Material hergestellt sein und beispielsweise mit dem Trägerkörper verbunden sein.

Eine besonders vorteilhafte Lösung sieht vor, dass die Mitnahmeelemente einstückig an den Trägerkörper angeformt sind und somit mit diesem ein zusammenhängendes Teil bilden.

Eine besonders stabile und robuste Lösung sieht vor, dass die Mitnahmeelemente aus Metall ausgebildet sind.

Hinsichtlich der Herstellung des Trägerkörpers wurden bislang keine näheren Angaben gemacht.

Eine besonders stabile Lösung sieht vor, dass der Trägerkörper aus Metall ausgebildet ist.

Eine weitere vorteilhafte Lösung sieht vor, dass der Trägerkörper aus einem Flachmaterial ausgebildet ist, wobei die Ausbildung des Trägerkörpers insbesondere ein Schneiden oder Stanzen und nachfolgendes Formen des Flachmaterials zum Gegenstand hat.

Besonders günstig ist es dabei, wenn der Trägerkörper aus dem Flachmaterial so geformt ist, dass dieser in einer um die Mittelachse herumverlaufenden Zylinderfläche verläuft und somit sich präzise an der Kupplungskugel oder einem Kugelkörper der Kupplungskugel führen lässt.

Da der Trägerkörper selbst aus Metall hergestellt sein soll und der Kugelkörper ebenfalls aus Metall hergestellt ist, lässt sich die Führung des Trägerkörpers an dem Kugelkörper der Kupplungskugel dann optimal gestalten, wenn der Trägerkörper an einer Trägerkörperführung geführt ist, die ihrerseits in der Nut des Kugelkörpers angeordnet ist.

Eine derartige Trägerkörperführung lässt sich insbesondere als Kunststoffelement ausbilden, so dass dadurch der aus Metall hergestellte Trägerkörper nicht unmittelbar an dem Kugelkörper aus Metall geführt werden muss und somit - ohne dass eine aufwändige Bearbeitung der Metalloberflächen erforderlich ist - in einfacher Weise eine leichte Drehbarkeit des Trägerkörpers relativ zum Kugelkörper dauerhaft realisierbar ist.

Insbesondere ist es dabei vorteilhaft, wenn die Trägerkörperführung den Trägerkörper berührungsfrei zum Kugelkörper führt.

Dabei ist es besonders günstig, wenn die Trägerkörperführung den Trägerkörper berührungsfrei zu Wandflächen der Nut führt, so dass letztlich die Bewegbarkeit des Trägerkörpers relativ zum Kugelkörper durch die Trägerkörperführung vorgegeben und definiert werden kann.

Eine besonders günstige Lösung sieht dabei vor, dass die Trägerkörperführung eine Aufnahme für den Trägerkörper aufweist, so dass der Trägerkörper beispielsweise in einer oder mehreren Nuten der Trägerkörperaufnahme geführt werden kann.

Dabei ist insbesondere die Trägerkörperaufnahme aus einem Kunststoffmaterial, vorzugsweise einem verschleißfesten Kunststoffmaterial, hergestellt. Ferner ist vorzugsweise die Trägerkörperaufnahme als zweigeteiltes Element ausgebildet, welches sich somit in einfacher Weise in die Nut im Kugelkörper einsetzen lässt.

Die vorstehende Beschreibung erfindungsgemäßer Lösungen umfasst somit insbesondere die durch Ansprüche definierten Merkmalskombinationen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht eines Kraftfahrzeugs mit einer erfindungsgemäßen Anhängekupplung von hinten;
- Fig. 2: eine Seitenansicht des Kraftfahrzeugs in Richtung des Pfeils A in Fig. 1 mit teilweise im Bereich der Anhängekupplung weg geschnittener Karosserie;
- Fig. 3: eine Ansicht in Richtung des Pfeils B in Fig. 1;
- Fig. 4: eine Seitenansicht ähnlich Fig. 2 mit einem an der Anhängekupplung montierten Lastenträger;
- Fig. 5: eine Seitenansicht ähnlich Fig. 2 mit einem an der Anhängekupplung angehängten Anhängers;
- Fig. 6: eine vergrößerte perspektivische Darstellung der Kupplungskugel in der Seitenansicht bei einem ersten Ausführungsbeispiel einer erfindungsgemäßen Anhängekupplung;
- Fig. 7: eine Ansicht des ersten Ausführungsbeispiels in Richtung des Pfeils C in Fig. 6;
- Fig. 8: eine Explosionsdarstellung des ersten Ausführungsbeispiels;
- Fig. 9: einen Schnitt längs Linie 9-9 in Fig. 7;
- Fig. 10: eine vergrößerte Darstellung des Bereichs D in Fig. 9;
- Fig. 11: einen Schnitt längs Linie 11-11 in Fig. 9;
- Fig. 12: eine perspektivische Darstellung eines Mitnahmerings gemäß dem ersten Ausführungsbeispiel;
- Fig. 13: eine Darstellung ähnlich Fig. 7 eines zweiten Ausführungsbeispiels einer erfindungsgemäßen Anhängekupplung;
- Fig. 14: einen Schnitt längs Linie 14-14 in Fig. 13;
- Fig. 15: eine vergrößerte Darstellung des Bereichs E in Fig. 14;
- Fig. 16: einen Schnitt längs Linie 16-16 in Fig. 15;
- Fig. 17: eine perspektivische Darstellung eines Mitnahmerings gemäß dem zweiten Ausführungsbeispiel;
- Fig. 18: eine perspektivische Darstellung eines Mitnahmerings gemäß einem dritten Ausführungsbeispiel einer erfindungsgemäßen Anhängekupplung;
- Fig. 19: eine vergrößerte Darstellung eines Schnitts längs Linie 19-19 in Fig. 18 und
- Fig. 20: eine perspektivische Darstellung eines Mitnahmerings eines vierten Ausführungsbeispiels einer erfindungsgemäßen Anhängekupplung;
- Fig. 21: eine Draufsicht auf den Mitnahmering gemäß Fig. 20;
- Fig. 22: eine vergrößerte Darstellung eines Schnitts längs Linie 22-22 in Fig. 18 mit angedeuteter Lage des Mitnahmerings in der Nut der Kupplungskugel und
- Fig. 23: einen Schnitt ähnlich Fig. 9 durch ein fünftes Ausführungsbeispiel einer erfindungsgemäßen Anhängekupplung.

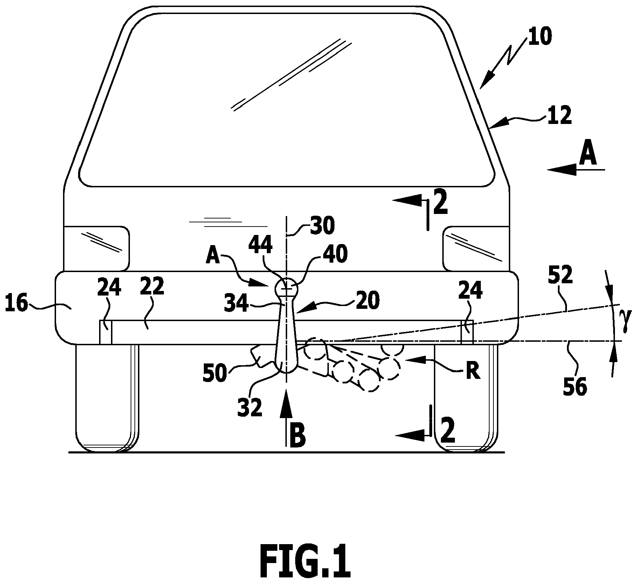

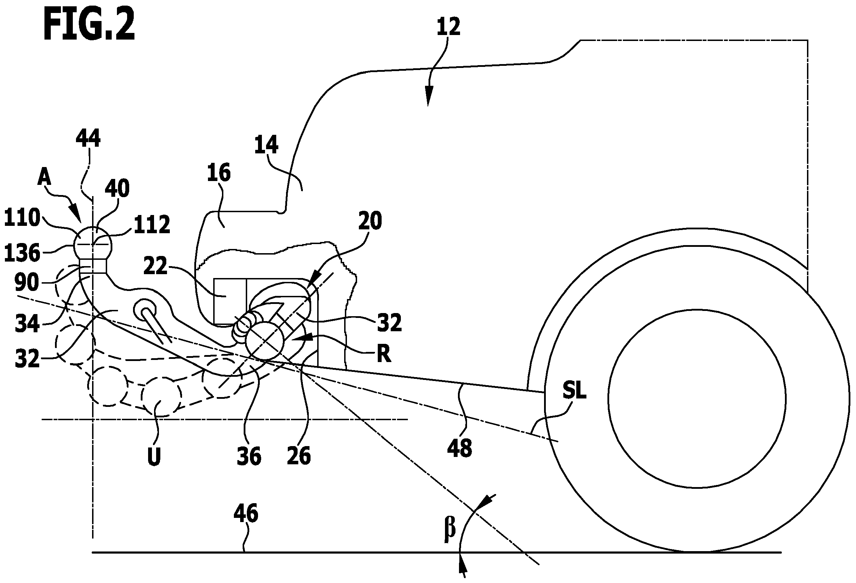

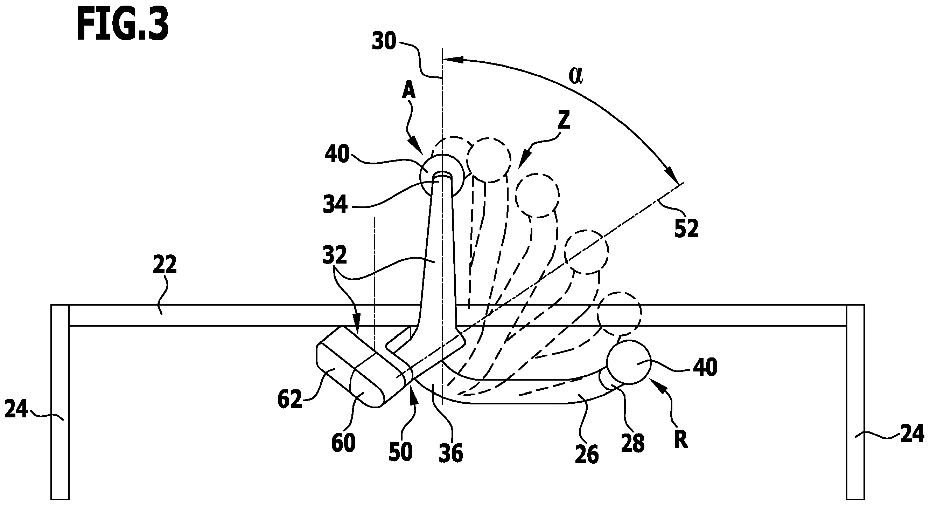

Ein in Fig. 1, 2 und 3 als Ganzes mit 10 bezeichnetes Kraftfahrzeug mit einer Kraftfahrzeugkarosserie 12 ist an einem Heckbereich 14 der Kraftfahrzeugkarosserie im Bereich einer hinteren Stoßfängereinheit 16 der Kraftfahrzeugkarosserie 12 mit einer Anhängekupplung 20 versehen.

Die Anhängekupplung 20 umfasst dabei einen Querträger 22, welcher über seitliche Längsträger 24 mit der Kraftfahrzeugkarosserie 12 verbunden ist, wobei sich die Längsträger 24 ungefähr parallel zu einer Längsmittelebene 30 der Kraftfahrzeugkarosserie 12 erstrecken, während der Querträger 22 sich quer zur Längsmittelebene 30 der Kraftfahrzeugkarosserie 12 und parallel zu einem heckseitigen Ende 26 derselben erstreckt.

Die Anhängekupplung 20 umfasst ferner einen als Ganzes mit 32 bezeichneten Kugelhals, welcher an einem ersten Ende 34 eine mit 40 bezeichnete Kupplungskugel trägt, während ein zweites Ende 36 des Kugelhalses 32 beispielsweise mittels einer als Ganzes mit 50 bezeichneten Schwenklagereinheit an dem Querträger 22 bewegbar gelagert ist, so dass der Kugelhals 32 zwischen einer Arbeitsstellung A und einer Ruhestellung R bewegbar ist.

Dabei ist der Kugelhals 32 mit der Kupplungskugel 40 in der Arbeitsstellung A zumindest im Bereich seines ersten Endes 34 symmetrisch zur Längsmittelebene 30 angeordnet und auch die Kupplungskugel 40 ist mit ihrer Mittelachse 44 in der Längsmittelebene 30 positioniert, so dass an die Kupplungskugel 40 ein Anhänger angehängt werden kann.

Insbesondere stellt die Längsmittelebene 30 auch gleichzeitig die Längsmittelebene 30 der Anhängekupplung 20 dar.

Ferner ist der Kugelhals 32 mit der von diesem getragenen Kupplungskugel 40 beispielsweise durch die Schwenklagereinheit 50 in die Ruhestellung R verschwenkbar, in welcher der Kugelhals 32 zwischen dem Querträger 22 und dem heckseitigen Ende 26 der Kraftfahrzeugkarosserie 12 liegt, insbesondere auf einer einer Fahrbahn 46 abgewandten Seite einer die Stoßfängereinheit 16 berührenden und in einem Winkel von 15° zur Fahrbahn 46 verlaufenden Sichtlinie SL und vorzugsweise oberhalb einer von der Kraftfahrzeugkarosserie 12 und der Unterkante der Stoßfängereinheit 16 definierten und der Fahrbahn 46 zugewandten Unterbodenfläche 48.

Dabei bilden der Querträger 22 mit dem Längsträger 24, die Schwenklagereinheit 50 und der Kugelhals 32 zusammen einen Kupplungskugelträger 52 für die Kupplungskugel 40, der alternativ zu der beschriebenen Lösung auch so ausgebildet sein kann, dass der Kugelhals lösbar und abnehmbar oder auch starr mit dem Heckbereich 14 der Fahrzeugkarosserie 12 verbunden ist.

Grundsätzlich kann die Schwenklagereinheit 50 so ausgebildet sein, dass der Kugelhals 26 um mehrere Schwenkachsen verschwenkbar ist, um diesen von der Arbeitsstellung A in die Ruhestellung R zu bewegen.

Bei dem in Fig. 1 bis 3 dargestellten vorteilhaften Ausführungsbeispiel, ist die Schwenklagereinheit 50 beispielsweise so ausgebildet, dass diese ein Verschwenken des Kugelhalses 26 um eine einzige Schwenkachse 54 vorsieht, welche schräg zum Querträger 22 und schräg zur Längsmittelebene 30 verläuft, vorzugsweise in der in Fig. 1 dargestellten Projektion auf eine horizontale Ebene einen Winkel α mit der Längsmittelebene 30 einschließt, der im Bereich zwischen 50 und 80 Grad liegt.

Ferner schließt die Schwenkachse 54 bei einer Projektion auf eine vertikale rechtwinklig zur Fahrzeuglängsmittelebene 30 verlaufende Ebene mit der horizontalen Ebene 56 einen Winkel γ ein, der zwischen 0 und 30 Grad liegt.

Zur Fixierung des Kugelhalses 26 in der Arbeitsstellung A und der Ruhestellung R ist die Schwenklagereinheit 50 mit einer als Ganzes mit 60 bezeichnete Verriegelungsvorrichtung vorgesehen, die nach verschiedensten Prinzipien arbeiten kann, jedoch stets in der Lage ist, den Kugelhals 32 in der Arbeitsstellung A und der Ruhestellung R unbeweglich relativ zur Schwenklagereinheit 50 und somit auch zum Querträger 22 und somit insgesamt zur Kraftfahrzeugkarosserie 12 festzulegen.

Ferner ist die Schwenklagereinheit 50 gegebenenfalls noch mit einer Antriebseinheit 62 versehen, mit welcher ein Betätigen der Verriegelungsvorrichtung und/oder motorischer Antrieb der Schwenkbewegung um die Schwenkachse 54 realisierbar ist.

Alternativ zum Vorsehen der Antriebseinheit 62 ist es aber auch möglich, nach dem jeweiligem Lösen der Verriegelungsvorrichtung 60 ein manuelles Verschwenken zwischen der Arbeitsstellung A und der Ruhestellung R vorzusehen.

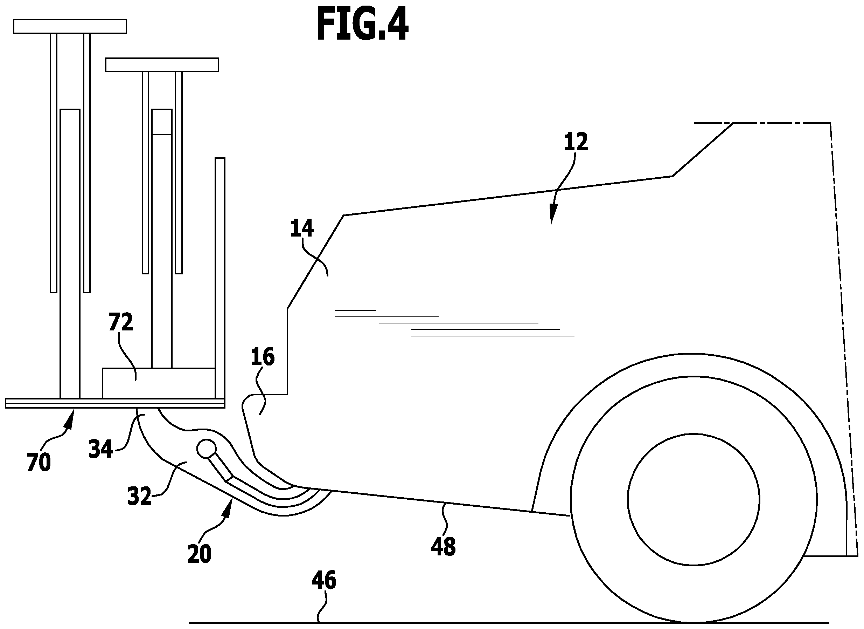

Wie in Fig. 4 dargestellt, dient eine derartige Anhängekupplung 20 beispielsweise dazu, um an der Fahrzeugkarosserie 12 einen Lastenträger 70 zu montieren, der mit einer Kupplung 72 versehen ist, welche einerseits die Kupplungskugel 40 aufnimmt und somit eine formschlüssige Fixierung im Bereich der Kupplungskugel 40 herstellt und andererseits zusätzlich noch entweder im Bereich der Kupplungskugel eine kraftschlüssige Verbindung mit dieser oder im Bereich des Kugelhalses 26 eine formschlüssige und/oder kraftschlüssige Verbindung mit diesem, insbesondere im Bereich des ersten Endes 34, eingeht, um den Lastenträger 70 insgesamt unbeweglich an dem Kugelhals 32 zu fixieren, wobei der Kugelhals 32 den gesamten Lastenträger 70 trägt und sämtliche Kipp-Momente, die vom Lastenträger 70 ausgehen, aufnimmt.

Ein derartiger Lastenträger 70 ist beispielsweise ein üblicher Lastenträger für Fahrräder, welche somit nahe des Heckbereichs 14 der Kraftfahrzeugkarosserie 12 transportiert werden können.

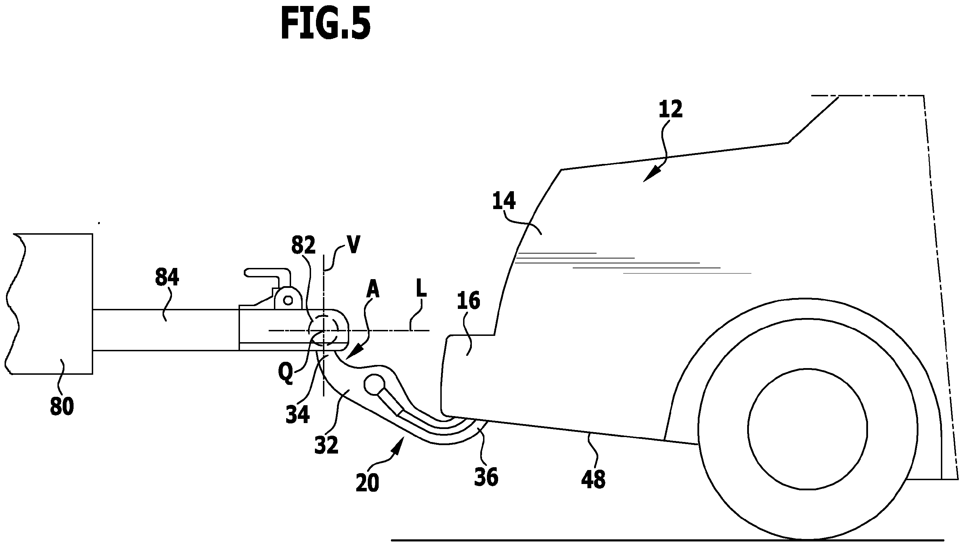

Wie in Fig. 5 dargestellt, dient eine derartige Anhängekupplung 20 aber auch dazu, einen in Fig. 5 schematisch angedeuteten Anhänger 80 zu ziehen, wobei der Anhänger 80 mit einer Zugkugelkupplung 82 an der Kupplungskugel 40 angreift und wobei die Zugkugelkupplung 82 an einem vorderen Ende einer Deichsel 84 des Anhängers 80 angeordnet ist.

Dabei bildet die Zugkugelkupplung 82 mit der Kupplungskugel 40 eine Zugverbindung ähnlich einem Kugelgelenk, so dass die Zugkugelkupplung 82 relativ zur Kupplungskugel 40 in der Arbeitsstellung A sowohl um eine in der Längsmittelebene 30 liegende Längsachse L, eine senkrecht auf der Längsmittelebene 30 stehende Querachse Q, die beide parallel zu einer horizontalen Ebene verlaufen, sowie um eine vertikale Achse V, die in der Längsmittelebene 30 liegt, schwenkbar ist.

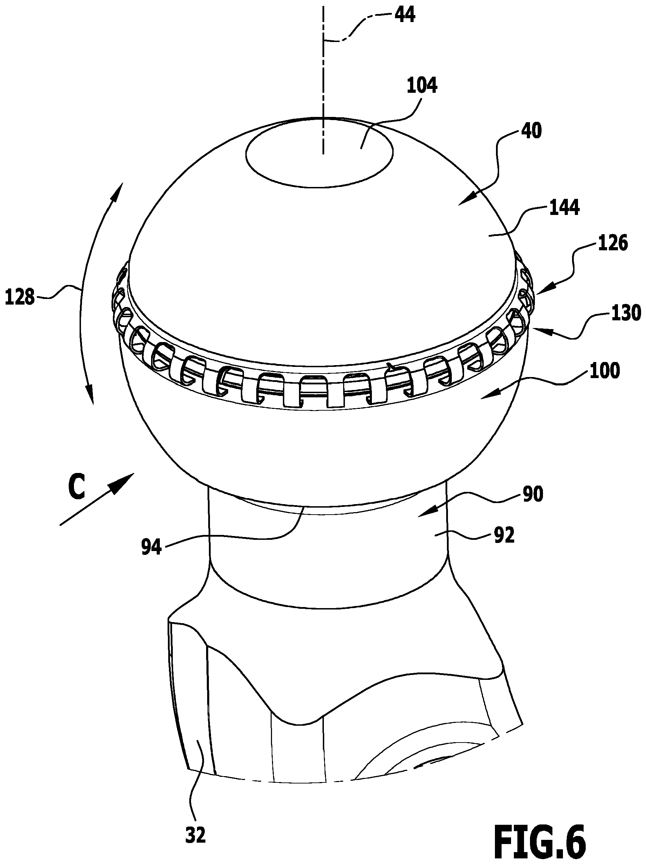

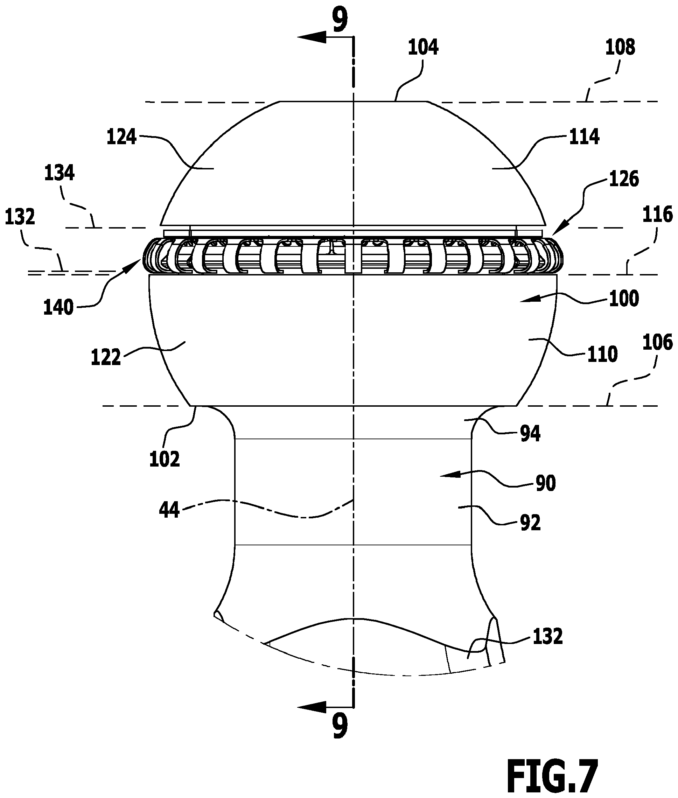

Wie in Fig. 6 und 7 dargestellt, umfasst eine erfindungsgemäße Kupplungskugel 40 einen sich an das erste Ende 34 des Kugelhalses 32 anschließenden Kugelansatz 90, welcher eine zylindrisch zu der Mittelachse 44 der Kupplungskugel 40 verlaufende zylindrische Mantelfläche 92 aufweist, die mit einer Rundung 94 in einen Kugelkörper 100 übergeht, welcher sich ausgehend von einer unteren, senkrecht zur Mittelachse 44 verlaufenden unteren Endfläche 102 bis zu einer oberen Endfläche 104 erstreckt.

Dabei ist die untere Endfläche 102 vorzugsweise eine die Rundung 94 beim Übergang von der zylindrischen Mantelfläche 92 des Kugelansatzes 90 zum Kugelkörper 100 umschließende Ringfläche, welche in einer, senkrecht zur Mittelachse 44 verlaufenden unteren geometrischen Ebene 106 liegt, während die obere Endfläche 104 in einer senkrecht zur Mittelachse 44 verlaufenden oberen geometrischen Ebene 108 liegt, so dass die Ebenen 106 und 108 parallel zueinander verlaufen.

Ferner ist insbesondere der Durchmesser der oberen Endfläche 104 geringer als der Durchmesser der zylindrischen Mantelfläche des Kugelansatzes 90.

Zwischen der unteren Endfläche 102 und der oberen Endfläche 104 weist der Kugelkörper 100 eine Kupplungskugeloberfläche 110 auf, welche einen Kugelflächenabschnitt einer um einen Kugelmittelpunkt 112 verlaufenden geometrischen Kugelfläche 114 darstellt, wobei der Kugelmittelpunkt 112 auf der Mittelachse 44 liegt und die Kupplungskugeloberfläche 110 lediglich den Teil der geometrischen Kugelfläche 114 umfasst, der zwischen der unteren geometrischen Ebene 106 und der oberen geometrischen Ebene 104 liegt.

Ferner weist der Mittelpunkt 112 einen geringeren Abstand von der unteren Ebene 106 auf als von der oberen Ebene 108, so dass eine zu den einander parallelen Ebenen 106 und 108 beispielsweise parallele und senkrecht zur Mittelachse 44 sowie durch den Kugelmittelpunkt 112 verlaufende Äquatorebene 116 die Kupplungskugeloberfläche 110 in eine untere Kugelzone 122 aufteilt, die zwischen der unteren Ebene 106 und der Äquatorebene 116 liegt und eine obere Kugelzone 124, die zwischen der Äquatorebene 116 und der oberen Ebene 108 liegt.

Sowohl die untere Kugelzone 122 als auch die obere Kugelzone 124 verlaufen rotationssymmetrisch um die Mittelachse 44 und stellen somit Bereiche der Kupplungskugeloberfläche 110 dar.

Bei der erfindungsgemäßen Anhängekupplung 20 weist der Kugelkörper 100 eine Sensorzone 126 auf, die vorzugsweise in der oberen Kugelzone 124 liegt zwar nahe der Äquatorebene 116 oder an diese angrenzt.

Vorzugsweise liegt dabei die Sensorzone 126 zwischen einer unteren Begrenzungsebene 132 und einer oberen Begrenzungsebene 134, die ebenfalls senkrecht zur Mittelachse 44 und somit parallel zu der unteren Ebene 106, der oberen Ebene 108 und der Äquatorialebene 116 verlaufen, wobei die untere Begrenzungsebene 132 und die obere Begrenzungsebene 134 der Sensorzone 126 einen Abstand voneinander aufweisen, der im Bereich von 4 mm bis 8 mm liegt.

Vorzugsweise liegt die untere Begrenzungsebene 132 der Sensorzone 126 in einem Abstand von der Äquatorialebene 116, der im Bereich von 0,5 bis 4 mm, vorzugsweise 1 bis 3 mm, liegt.

Die Sensorzone 126 erstreckt sich rotationssymmetrisch um die Mittelachse 44 herum.

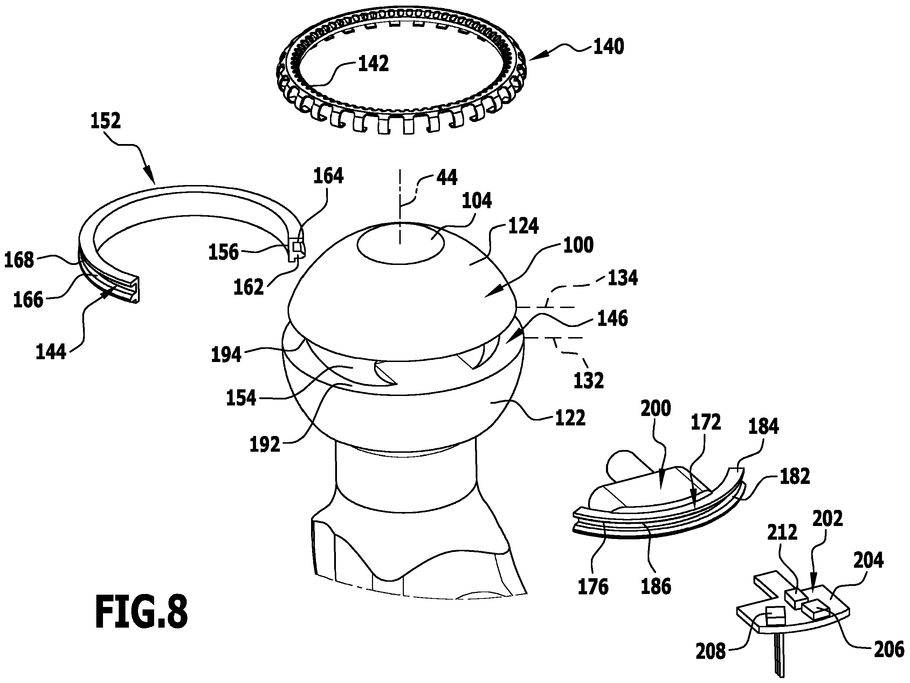

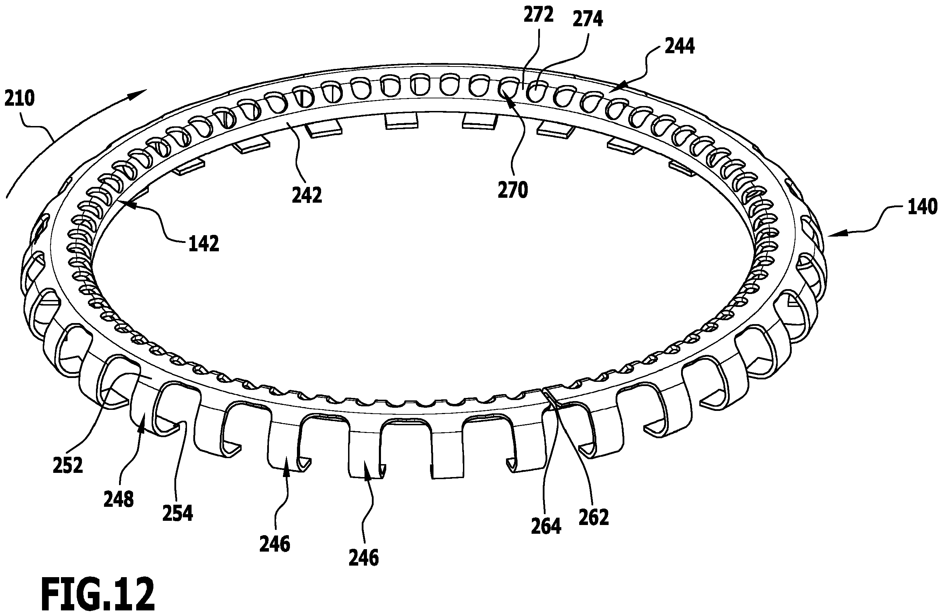

In der Sensorzone 126 ist, wie in Fig. 6 und 7 dargestellt, ein als Ganzes mit 140 bezeichneter Mitnahmering vorgesehen, welcher um die Mittelachse 44 umlaufend in einer an dem Kugelkörper 100 vorgesehenen und um diesen umlaufenden Nut 146 angeordnet ist und, wie in Fig. 8 und 10 bis 12 dargestellt, einen Trägerkörper 142 aufweist, der insbesondere in einer Trägerkörperführung 144 drehbar um die Mittelachse 44 angeordnet ist, wobei die Trägerkörperführung 144 beispielsweise in der im Kugelkörper 100 vorgesehenen Nut 146 angeordnet ist.

Die Nut 146 erstreckt sich vorzugsweise zwischen den Begrenzungsebenen 132 und 134 der Sensorzone 126 und läuft geschlossen um die Mittelachse 44 um.

Beispielsweise umfasst die Trägerkörperführung 144 einen C-förmigen Körper 152 mit einem an einem Nutgrund 154 der Nut 146 anliegenden Innenkörper 156, an welchen beidseitig radial von der Mittelachse 44 weg nach außen überstehende Flanschkörper 162 und 164 angeformt sind, die ihrerseits einen radial außenliegenden Führungsbahnabschnitt 166 für den Trägerkörper 142 des Mitnahmerings 140 bilden.

Der C-förmige Körper 152 ist als offenes Bogensegment ausgebildet, welches durch einen Segmentkörper 172 mit identischem Querschnitt zu einem geschlossenen Ring ergänzt wird, wobei der Segmentkörper 172 ebenfalls einen Innenkörper 176 sowie an diesen angeformte Flanschsegmente 182 und 184 aufweist, die zusammen mit dem Innenkörper 176 ein Führungsbahnsegment 186 bilden, welches den Führungsbahnabschnitt 166 des C-förmigen Körpers zu einer um die Mittelachse 44 umlaufenden Führungsbahn 168 ergänzt, so dass insgesamt der C-förmige Körper 152 zusammen mit dem Segmentkörper 172 die um die Mittelachse 44 umlaufende Trägerkörperführung 144 für den Trägerkörper 142 des Mitnahmerings 140 bilden.

Durch die Bildung der Trägerkörperführung 144 mit der Führungsbahn 168 einerseits aus dem C-förmigen Körper 152 und andererseits aus dem Segmentkörper 172 lassen sich diese auch in einfacher Weise beim Zusammenbau in die Nut 146 des Kugelkörpers 100 einsetzen, wobei jeweils der Innenkörper 156 beziehungsweise 176 derselben an dem Nutgrund 154 anliegt und sich außerdem der jeweilige Innenkörper 156 beziehungsweise 176 zwischen einer in der Begrenzungsebene 132 liegenden Nutwand 192 und einer in der Begrenzungsebene 134 liegenden Nutwand 194 erstreckt und durch diese Nutwände 192 und 194 gegen eine Bewegung in Richtung parallel zur Mittelachse 44 gesichert ist.

An dem Segmentkörper 172 ist vorzugsweise noch eine Sensoraufnahmeeinheit 200, beispielsweise ein Gehäuse, angeordnet, in welcher eine Sensoreinheit 202 angeordnet ist, die beispielsweise eine Schaltungsplatine 204 aufweist, auf welcher mindestens ein Magnetfeldsensor 206 angeordnet ist.

Vorzugsweise sind bei dem dargestellten Ausführungsbeispiel zwei Magnetfeldsensoren 206 und 208, angeordnet, die in einer Umlaufrichtung 210 um die Mittelachse 44 einen Abstand voneinander aufweisen.

Der Magnetfeldsensor 206 oder beide Magnetfeldsensoren 206, 208 sind beispielsweise mittels eines Permanentmagneten 212, der ebenfalls auf der Schaltungsplatine 204 angeordnet ist, von dessen Magnetfeld durchflutet sind, wobei der jeweilige Magnetfeldsensor 206 und 208 erfasst, ob und in welchem Maße sich das diesen durchsetzende Magnetfeld des Permanentmagneten 212 ändert.

Vorzugsweise ist der Permanentmagnet 212 relativ zu den Magnetfeldsensoren 206 und 208 bezogen auf die Mittelachse 44 radial nach innen versetzt angeordnet, so dass das von diesem ausgehende ebenfalls sich mindestens mit einer Komponente in radialer Richtung ausbreitende Magnetfeld den einen Magnetfeldsensor 206 oder die beiden Magnetfeldsensoren 206 und 208 durchfluten kann und eine Detektionsrichtung D vorgibt, die mindestens eine Komponente in radialer Richtung zur Mittelachse 44 aufweist.

Alternativ zum Vorsehen eines einzelnen Permanentmagneten 212 wäre es aber auch denkbar, jedem der Magnetfeldsensoren 206 und 208 einen Permanentmagneten zuzuordnen.

Der Magnetfeldsensor 206 oder die Magnetfeldsensoren 206 und 208 sitzen bezogen auf die Mittelachse 44 radial möglichst weit nach außen versetzt und somit möglichst nahe an, vorzugsweise anliegend an dem Innenkörper 176 des Segmentkörpers 172 angeordnet.

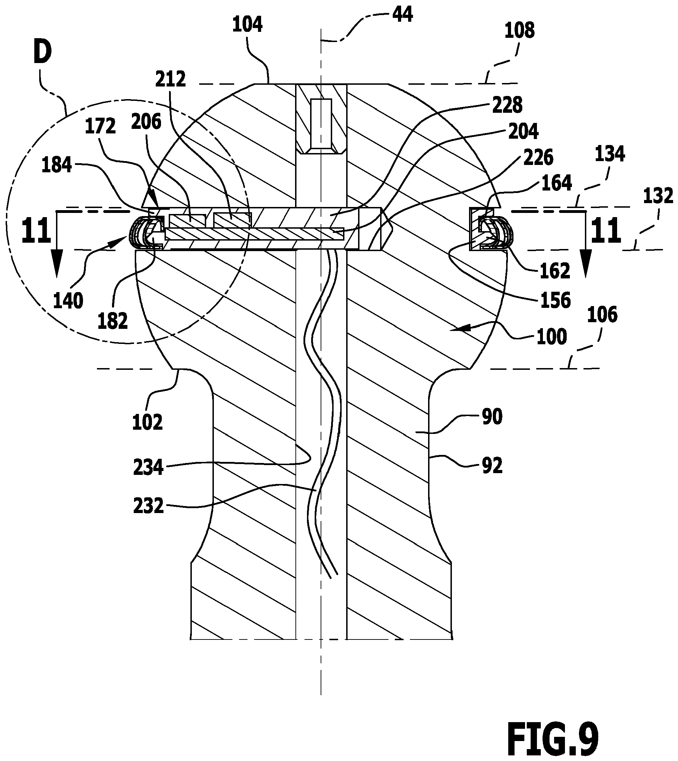

Besonders vorteilhaft ist es, wenn die Sensoraufnahme 200 einstückig an den Segmentkörper 172 angeformt ist, so dass der Magnetfeldsensor 206 oder die Magnetsensoren 206 und 208 auch in möglichst geringem Abstand zu der Führungsnut 186 im Segmentkörper 172 positionieren lassen, wie dies beispielsweise in den Fig. 9, 10 und 11 dargestellt ist.

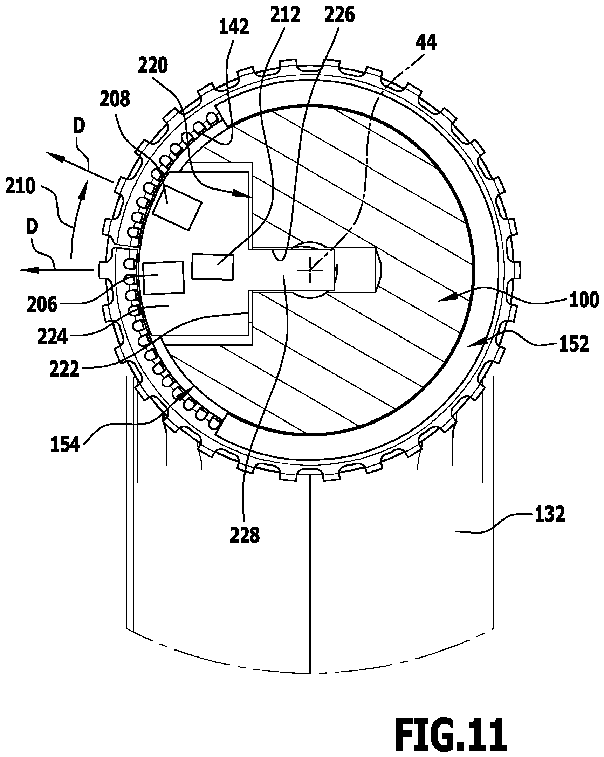

Wie in Fig. 8 und 11 dargestellt, ist der Kugelkörper 100 mit einer sich im Anschluss an die Nut 146 in den Kugelkörper 100 hineinerstreckenden Ausnehmung 220 versehen, in welcher die Sensoraufnahmeeinheit 200 positionierbar ist, wobei die Ausnehmung 220 einen sich an den Nutgrund 154 anschließenden und in den Kugelkörper 100 hineinerstreckenden Außenbereich 222 aufweist, in welchem ein die Magnetfeldsensoren 206 und 208 sowie der den Permanentmagnet 212 aufweisende Teil 224 der Sensoraufnahmeeinheit 200 angeordnet ist, und einen Innenbereich 226 aufweist, in welchem sich ein Fortsatz 228 erstreckt, der die Mittelachse 44 schneidet und in einen als Zentralkanal ausgebildeten Leitungskanal 232 eingreift, welcher sich zumindest im Bereich des Kugelkörpers 100 näherungsweise parallel zur Mittelachse 44 erstreckt.

Unter einem näherungsweise parallelen Verlauf des Leitungskanals 232 zur Mittelachse 40 ist dabei ein Verlauf zu verstehen, bei welchem der Winkel zwischen einer Mittelachse des Leitungskanals 232 und der Mittelachse 44 bis zu 20° betragen kann, vorzugsweise 15° oder weniger, noch besser 10° oder weniger, beträgt.

Dadurch, dass sich der Fortsatz 228 der Sensoraufnahme 200 bis in den Leitungskanal 232 erstreckt, besteht die Möglichkeit, ausgehend von dem Fortsatz 228 eine elektrische Leitung 234 durch den Leitungskanal 232 zu führen, der an einer geeigneten Stelle im Kugelhals 32 eine Austrittsöffnung aufweist, aus welcher die elektrische Leitung 234 dann herausgeführt werden kann.

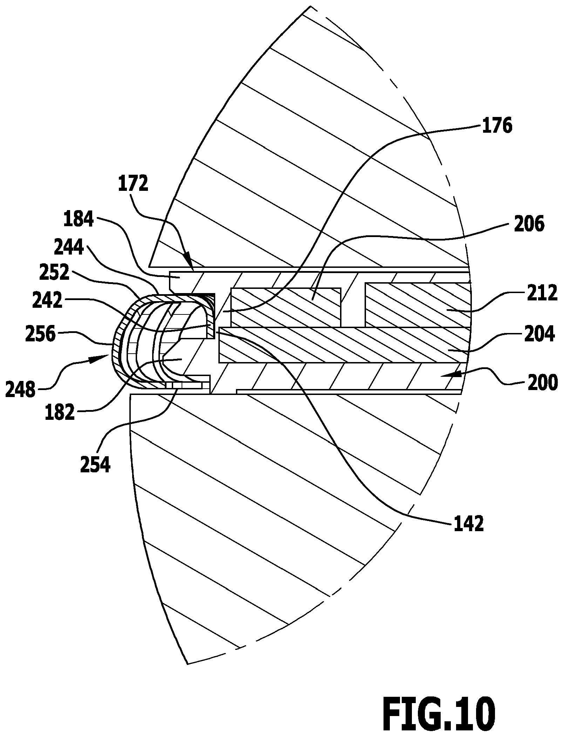

Wie insbesondere in den Fig. 10 bis 12 dargestellt, umfasst der Trägerkörper 142 einen Führungskörper 242, welcher, wie in Fig. 10 dargestellt, an dem jeweiligen Innenkörper 156 beziehungsweise 176 der Trägerkörperführung 144 anliegt und zwischen den angeformten Flanschkörpern 162 und 164 beziehungsweise den Flanschsegmenten 182 und 184 gegen eine Bewegung in Richtung parallel zur Mittelachse 44 geführt ist.

Ausgehend von dem Führungskörper 242 erstreckt sich eine Trägerbasis 244 beispielsweise radial zur Mittelachse 44 nach außen, an welcher in einer Umlaufrichtung um die Mittelachse 44 im Abstand voneinander angeordnete Mitnahmeelemente 246 angeordnet sind, die radial zur Mittelachse 44 federelastisch bewegbar ausgebildet sind, so dass sie mit einer Innenkontur eines an der Kupplungskugel 40 angreifenden Elements, beispielsweise der Zugkugelkupplung 82, eine kraftschlüssige und/oder formschlüssige drehfeste Verbindung eingehen.

Die Mitnahmeelemente 246 sind beispielsweise als sich ausgehend von der Trägerbasis 244 in durch die Mittelachse 44 verlaufenden Radialebenen C-förmig verlaufende Zungen 248, beispielsweise aus Flachmaterial, ausgebildet, die einen mit der Trägerbasis 244 verbundenen Zungenansatz 252 und ein freies Zungenende 254 aufweisen und ausgehend von dem Zungenansatz 252 konvex verlaufen, so dass sich beispielsweise das freie Zungenende 254, wie in Fig. 10 beispielsweise dargestellt, ungefähr parallel zur Trägerbasis 244 erstreckt.

Insbesondere ist der Trägerkörper 142 des Mitnahmerings 140 so ausgebildet, dass dieser sowohl mit dem Führungsschenkel 242 als auch mit der Trägerbasis 244 in der Nut 146 liegt und nicht über die geometrische Kugelfläche 114 übersteht, während die von der Trägerbasis 244 ausgehenden Mitnahmeelemente 246, insbesondere in Form der Zungen 248, mit einem zwischen dem Zungenansatz 252 und dem freien Zungenende 254 liegenden radial zur Mittelachse 44 konvex nach außen gebogenen Mitnahmebereich 256 radial über die geometrische Kugelfläche 114 überstehen, um mit einem an der Kupplungskugel 40 angreifenden Element, insbesondere einer Zugkugelkupplung 82, eine kraftschlüssige und/oder formschlüssige Verbindung herzustellen, so dass das Mitnahmeelement 140 den Drehbewegungen der Zugkugelkupplung 82 relativ zur Kupplungskugel 40 um die Mittelachse 44 folgt und somit in der Lage ist, sich in gleichem Maße wie die Zugkugelkupplung 82 um die Mittelachse 44 drehend zu bewegen.

Um zu verhindern, dass sich die Zungen 248 beim Abnehmen des an der Kupplungskugel 40 angreifenden Elements, beispielsweise der Zugkugelkupplung 82, an dieser verhaken, liegt das freie Zungenende 254 vorzugsweise in der Nut 146 des Kugelkörpers 100 und insbesondere liegt das freie Zungenende 254 dabei, wie in Fig. 10 dargestellt, an den Flanschkörpern 162 des C-förmigen Körpers 152 und dem Flanschsegment 182 des Segmentkörpers 172 an und bewegt sich dabei insbesondere berührungsfrei zur Nutwand 192 um die Mittelachse 44.

Bei dem dargestellten Ausführungsbeispiel des Mitnahmerings 140 sind die Zungen 248 einstückig an den Trägerkörper 142, insbesondere die Trägerbasis 244, angeformt.

Besonders vorteilhaft ist es dabei, wenn sowohl der Trägerkörper 142 als auch die Mitnahmeelemente 246, insbesondere die Zungen 248, aus Metall hergestellt sind, insbesondere einem federelastischen Flachmaterial, welches somit eine radial federnde Bewegung jedes einzelnen Mitnahmeelements 246 und somit auch jede einzelne Zunge 248 relativ zum Trägerkörper 142 ermöglicht, so dass sich die Mitnahmeelemente 246 des Mitnahmerings 140 allen Innenkonturvariationen, beispielsweise der Zugkugelkupplung 82, anpassen können und somit mit dieser entweder eine kraftschlüssige und/oder eine formschlüssige drehfeste Verbindung eingehen können, so dass der Mitnahmering 140 - wie bereits beschrieben - sämtlichen Drehbewegungen der Zugkugelkupplung 82 um die Mittelachse 44 folgt.

Die Ausbildung der Mitnahmeelemente 246 aus Metall hat den Vorteil, dass deren federelastisches Verhalten, insbesondere in radialer Richtung zur Mittelachse 44, durch das Metall geprägt ist, welches beispielsweise im Verhältnis zu Kunststoff eine wesentliche geringere Temperaturabhängigkeit im Bereich von -30°C bis + 100°C zeigt.

Vorzugsweise ist der Trägerkörper 142 des Mitnahmerings 140 im betriebsfähig montierten Zustand als um die Mittelachse 44 umlaufender geschlossener Körper ausgebildet, wobei der geschlossene Körper dadurch entsteht, dass der Trägerkörper 142 aus einem Flachmaterial zu einem ringähnlich gebogenen Körper mit zwei Ringenden 262 und 264 wird und im Bereich der Ringenden 262 und 264 zu einem in einer Umlaufrichtung um die Mittelachse 44 geschlossen umlaufenden Gebilde verbunden wird.

Eine derartige Verbindung im Bereich der Ringenden 262 und 264 kann dabei entweder eine stoffschlüssige oder eine formschlüssige Verbindung sein.

Besonders bevorzugt ist dabei eine formschlüssige Verbindung, die es erlaubt, zunächst zur Montage an dem Kugelkörper 100 den Trägerkörper 142 im Bereich der Ringenden 262 und 264 aufzutrennen, um diesen in die in der Nut 146 sitzende Trägerkörperführung 144, gebildet durch den C-förmigen Körper 152 und den Segmentkörper 172, einsetzen zu können und erst nach Einsetzen des Trägerkörpers 142 die Ringenden 262 und 264 miteinander zu verbinden.

Besonders vorteilhaft lässt sich ein derartiger Mitnahmering 140 aus dem Trägerkörper 142 und den Mitnahmeelementen 246 dann herstellen, wenn sowohl der Trägerkörper als auch die Mitnahmeelemente 246 aus einem Flachmaterial, beispielsweise aus einem federelastischen Metall, insbesondere einem Flachmaterialstreifen, ausgeschnitten und dann in die gewünschte Form gebogen werden.

Um die Drehbewegungen des Mitnahmerings 140 relativ zum feststehenden Kugelkörper 100 mittels der Magnetfeldsensoren 206 und 208 erfassen zu können, ist der Trägerkörper 142 mit einer Abtaststruktur 270 versehen, welche es der Sensoreinheit 202 erlaubt, die Relativbewegung des Trägerkörpers 142 um die Mittelachse 44 relativ zur feststehend im Kugelkörper 100 angeordneten Sensoreinheit 202 zu erfassen.

Die Abtaststruktur 270 ist als regelmäßige periodische Struktur ausgebildet und an die Art der Sensoren der Sensoreinheit 202 angepasst, dass die Sensoreinheit 202 in der Lage ist, die Relativbewegung der Abtaststruktur 270 mit einer Winkelauflösung von weniger als 1° zu dieser zu erfassen.

Im Fall der von dem Magnetfeld des Permanentmagneten 212 durchfluteten Magnetfeldsensoren 206 und 208 ist die Abtaststruktur 172 eine Struktur, bei welcher das Magnetfeld des Permanentmagneten 212 in unterschiedlichem Maße beeinflussende Bereiche 272 und 274 in Umlaufrichtung um die Mittelachse 44 einander abwechseln.

Ist beispielsweise das Material des Trägerkörpers 142 magnetisierbar, so lassen sich die weniger stark magnetisierbaren Bereich 274 durch Durchbrüche im Trägerkörper, insbesondere im Bereich zwischen dem Führungsschenkel 242 und der Führungsbasis 244, realisieren, während die stärker magnetisierbaren Bereiche 272 die zwischen den Durchbrüchen 274 liegenden Materialstege sind.

Vorzugsweise haben die stärker magnetisierbaren Bereich 272 und die weniger stark magnetisierbaren Bereiche 274 jeweils dieselbe Ausdehnung in der Umlaufrichtung 210 um die Mittelachse 44, so dass ein aufeinanderfolgendes Vorbeibewegen von stärker magnetisierbaren Bereichen 272 und weniger stark magnetisierbaren Bereichen 274 an den Magnetfeldsensoren 206 und 208 von diesen dadurch erfasst werden kann, dass sich das zu den stärker magnetisierbaren Bereichen 272 und zu den weniger stark magnetisierbaren Bereichen 274 erstreckende Magnetfeld des Permanentmagneten 212, welches die jeweiligen Magnetfeldsensoren 206 und 208 durchflutet, entsprechend der jeweils nahe der Magnetfeldsensoren 206, 208 stehenden stärker magnetisierbaren Bereiche 272 und der weniger stark magnetisierbaren Bereiche 274 verändert, so dass sich die Drehbewegung des Mitnahmerings 140 um die Mittelachse 44 relativ zu der Sensoreinheit 202 mit der erforderlichen Winkelauflösung erfassen lässt.

Insbesondere lässt sich eine derartige Erfassung der Drehbewegung dann vorteilhaft realisieren, wenn das Material des Trägerkörpers 142 ein magnetisierbares dauerhaft elastisches Metall ist.

Ferner ist es vorteilhaft, wenn das Material des Mitnahmerings zumindest korrosionsbeständig beschichtet oder aus korrosionsbeständigem Material hergestellt ist.

Derartige korrosionsbeständige Materialien sind beispielsweise:
- Martensitische korrosionsbeständige Stähle bekommen hartmagnetische Eigenschaften durch eine Wärmebehandlung und haben hohe Festigkeitswerte (härt- und vergütbar); Bsp. 1.4005, 1.4021, 1.4044, 1.4313
- Austenitisch-ferritische korrosionsbeständige Werkstoffe haben ebenfalls magnetische Eigenschaften bei höheren Festigkeiten; Bsp. 1.4462, 1.4362
- Austenitische korrosionsbeständige Stähle sind zunächst nicht magnetisierbar, die Stähle sind gut umformbar; bei einer Kaltumformung werden Anteile von Martensit gebildet (sog. Verformungsmartensit), was zu einem hier gewünschten ferromagnetischen Verhalten führt; ebenso wird die Festigkeit durch die Kaltverfestigung gesteigert, d.h. die Werkstoffe haben federnde Eigenschaften; Bsp. 1.4305, 1.4301, 1.4310, 1.4401

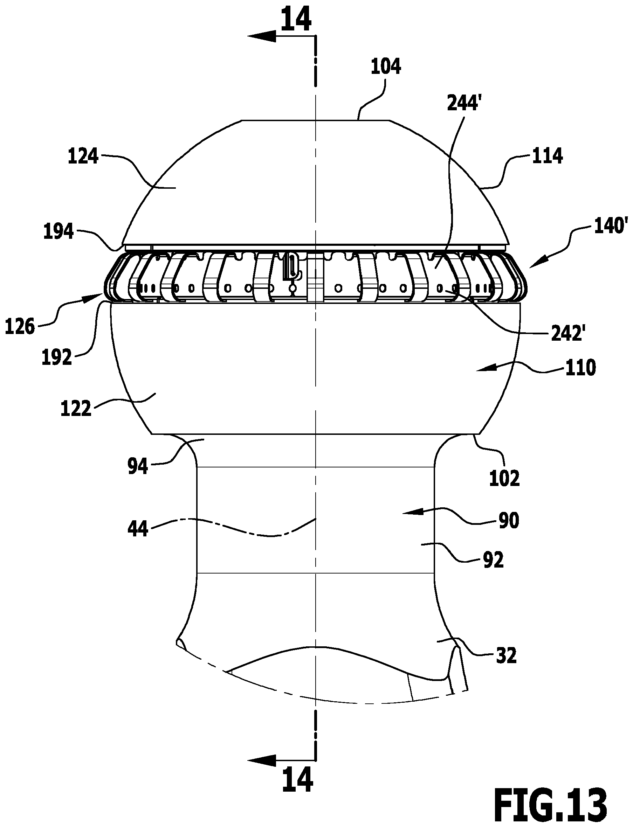

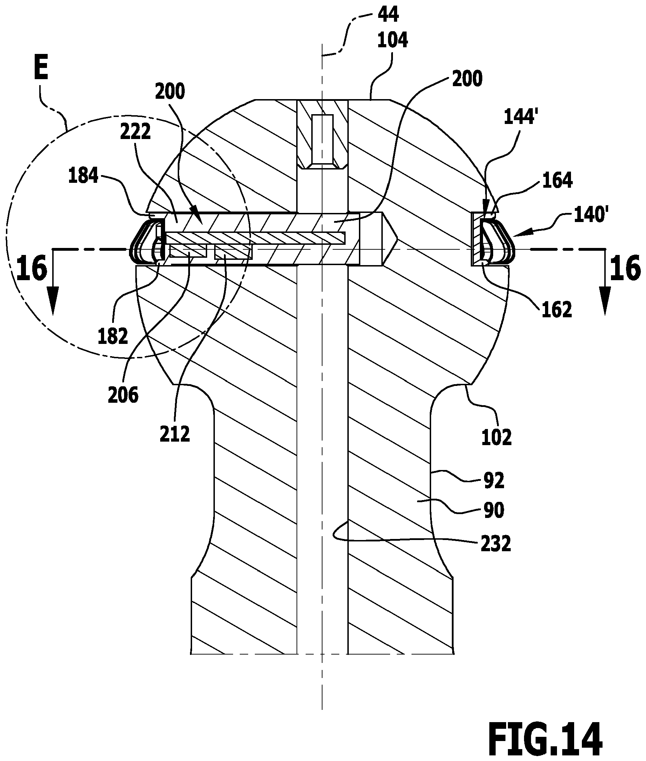

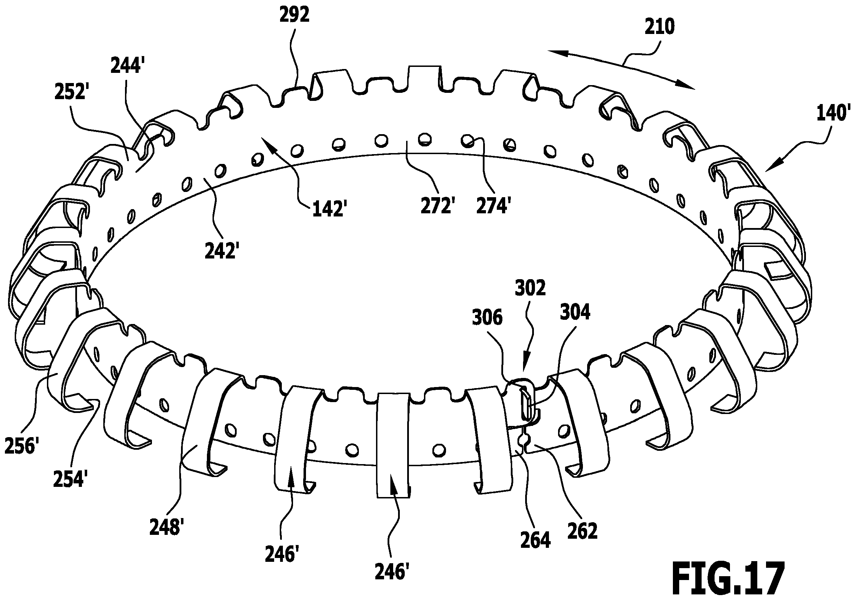

Bei einem zweiten Ausführungsbeispiel eines erfindungsgemäßen Mitnahmerings 140', dargestellt in den Fig. 13 bis 17, sind der Führungsschenkel 242' und die Trägerbasis 244' zu einem zylindrisch um die Mittelachse 44 umlaufenden Körper des Mitnahmerings 140' vereinigt, wobei die sich ausgehend von der Trägerbasis 244' erstreckenden Mitnahmeelemente 248' ebenfalls um die Mittelachse 44 umlaufend im Abstand voneinander angeordnet sind.

Zur exakten Führung der Einheit aus Führungsschenkel 242' und Trägerbasis 244' ist die Trägerbasis 244' noch mit Fortsätzen 292 versehen, die jeweils zwischen aufeinanderfolgenden Mitnahmeelementen 246' angeordnet sind und somit die Einheit aus der Trägerbasis 244' und der im Führungsschenkel 242' zwischen den Flanschsegmenten 182 und 184 sowie den entsprechenden Flanschkörpern 162 und 164 der Trägerkörperführung 144' gegen Bewegungen in Richtung der Mittelachse 44 führen.

Ferner erstrecken sich dann die als Zungen 248' ausgebildeten Mitnahmeelemente 246' ebenfalls ausgehend von der jeweiligen Zungenansatz 252' konvex gewölbt und radial zur Mittelachse 44 nach außen und dann weiter wie der radial nach innen bis zu dem freien Zungenende 254', welches wiederum in Richtung des Führungsschenkels 242' weist.

Damit liegen zumindest die konvex gewölbten und radial zur Mittelachse 44 federelastisch ausgebildeten Mitnahmebereiche 256' zumindest teilweise radial außerhalb der geometrischen Kugelfläche 114, um eine kraftschlüssige und/oder formschlüssige Verbindung beispielsweise mit der jeweiligen Zugkugelkupplung 82 einzugehen.

Bei diesem Ausführungsbeispiel sind dann die stärker magnetisierbaren Bereiche 272' und die weniger stark magnetisierbaren Bereiche 274' im Bereich des Führungsschenkels 242' angeordnet, und zwar nahe des Flanschsegments 182 und des Flanschkörpers 162.

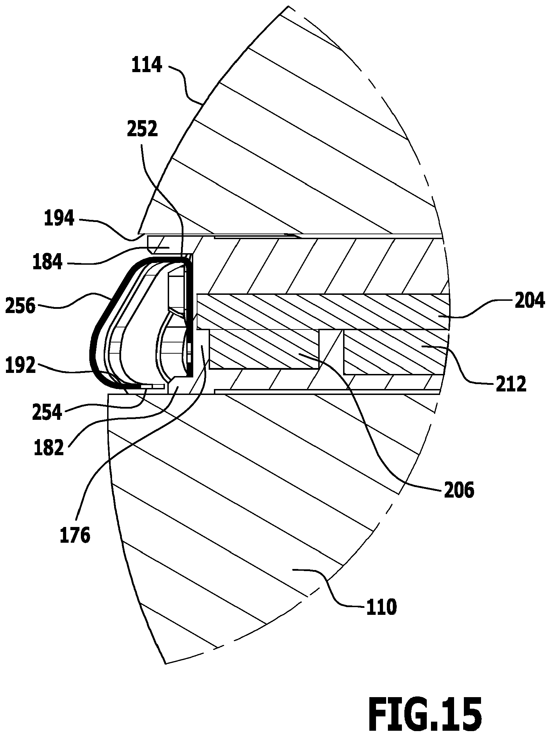

Entsprechend sind dann die zur Erfassung dieser Bereiche 272', 274' vorgesehenen Magnetfeldsensoren 206 und 208 angeordnet, wie in Fig. 15 dargestellt.

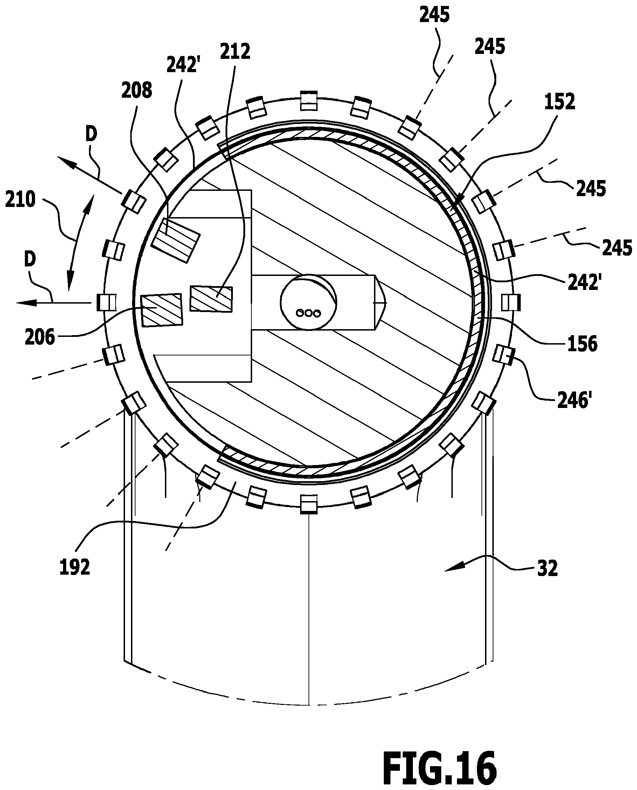

Ferner liegen die freien Zungenenden 254 ebenfalls innerhalb der Nut 146, und zwar vorzugsweise, wie in Fig. 16 dargestellt, nahe des Flanschsegments 182 beziehungsweise des Flanschkörpers 162, sie verlaufen jedoch berührungslos zu der jeweiligen Nutwand 192.

Ferner ist bei diesem Ausführungsbeispiel des Mitnahmerings 140' zur Verbindung der Ringenden 262 und 264 ein Verschluss 302 vorgesehen, welcher eine formschlüssige Verbindung zwischen den Ringenden 262 und 264 beispielsweise dadurch ermöglicht, dass an einem der Ringenden eine sich radial zur Mittelachse 44 erstreckende Lasche 304 vorgesehen ist, welche eine am Ringende 264 vorgesehene Öse 306 durchsetzt und somit eine formschlüssige Verbindung zwischen den Ringenden 262 und 264 schafft, die es ermöglicht, die Ringenden 262 und 264 zum Einsetzen des Mitnahmerings 140' mit seinem Trägerkörper 142' in die Trägerkörperführung 144 auseinander zu bewegen und nach Einsetzen des Trägerkörpers 142' in die Trägerkörperführung 144 formschlüssig zu verbinden.

Im Übrigen sind diejenigen Teile, die mit denen des voranstehenden Ausführungsbeispiels identisch sind, mit denselben Bezugszeichen versehen, so dass hinsichtlich der Beschreibung derselben vollinhaltlich auf die Ausführungen zu dem voranstehenden Ausführungsbeispiel Bezug genommen wird.

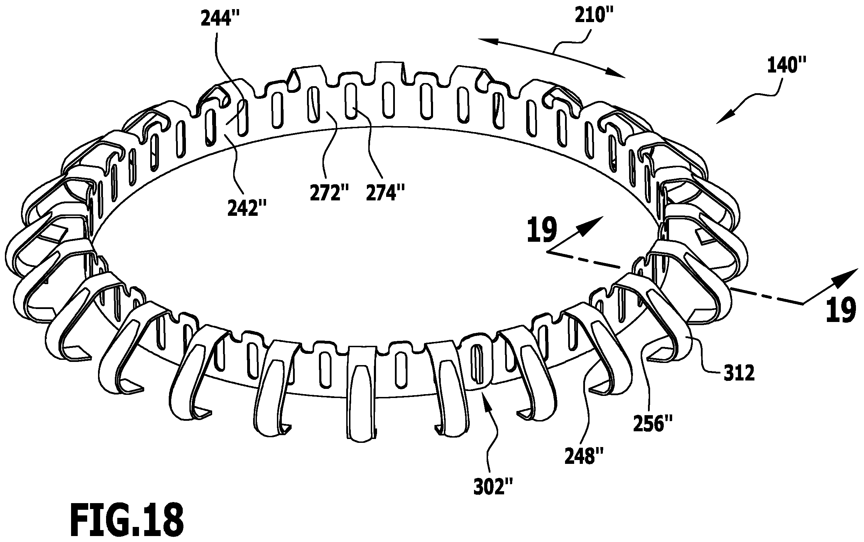

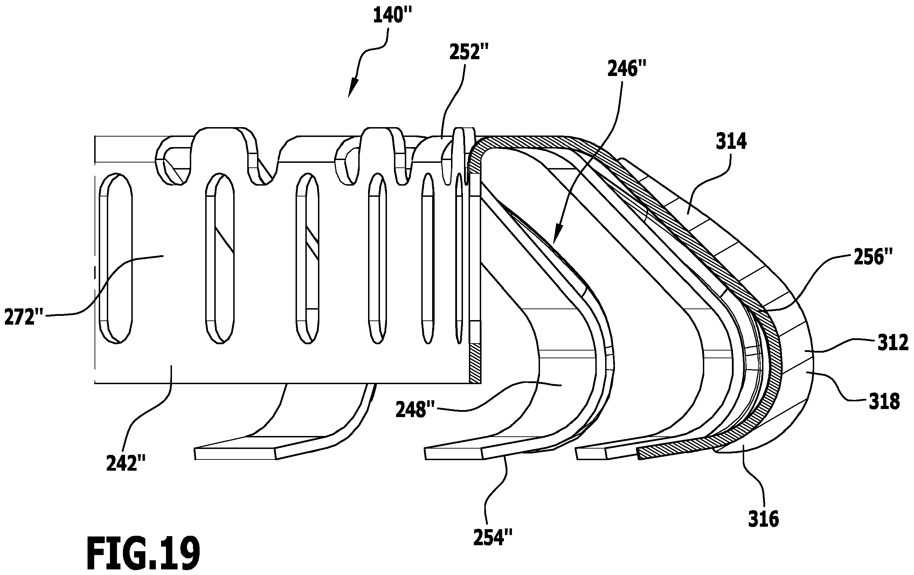

Ein drittes Ausführungsbeispiel eines Mitnahmerings 140"', dargestellt in Fig. 18 und 19 basiert im Prinzip auf dem zweiten Ausführungsbeispiel, mit dem Unterschied, dass sich im Bereich des Führungsschenkels 242" und der Führungsbasis 244" die weniger stark magnetisierbaren Bereiche 274" über die gesamte Höhe der Einheit aus Führungsschenkel 242" und Trägerbasis 244" erstrecken, so dass die Positionierung der Sensoreinheit 202 weniger kritisch ist.

Darüber hinaus sind die Zungen 248" in ihren konvexen Bereichen 256" mit Elastomerauflagen 312 versehen, die auf einer der Mittelachse 44 abgewandten Seite der Zungen 248" aufgetragen ist und somit dann, wenn die Zungen 248" aus Metall hergestellt sind, einerseits oberflächenschonend und andererseits kraftschlussverbessernd mit der entsprechenden Innenkontur beispielsweise der Zugkugelkupplung 82 in Wechselwirkung treten, so dass dadurch die Kopplung mit der Zugkugelkupplung 82 einerseits verbessert ist und andererseits im Bereich der Zugkugelkupplung 82 weniger Verschleiß auftritt und auch die Gefahr eines Verkantens oder Festkrallens in der Zugkugelkupplung 82 gemindert ist.

Vorzugsweise verläuft die Elastomerauflage 312 auf den konvexen Mitnahmebereichen 256 so, dass deren Auflagendicke in jeweils der Nut 146 nächstliegenden Endbereichen 314 und 316 geringer ist als in einem Bereich 318, der den größten radialen Abstand von der Mittelachse 44 aufweist.

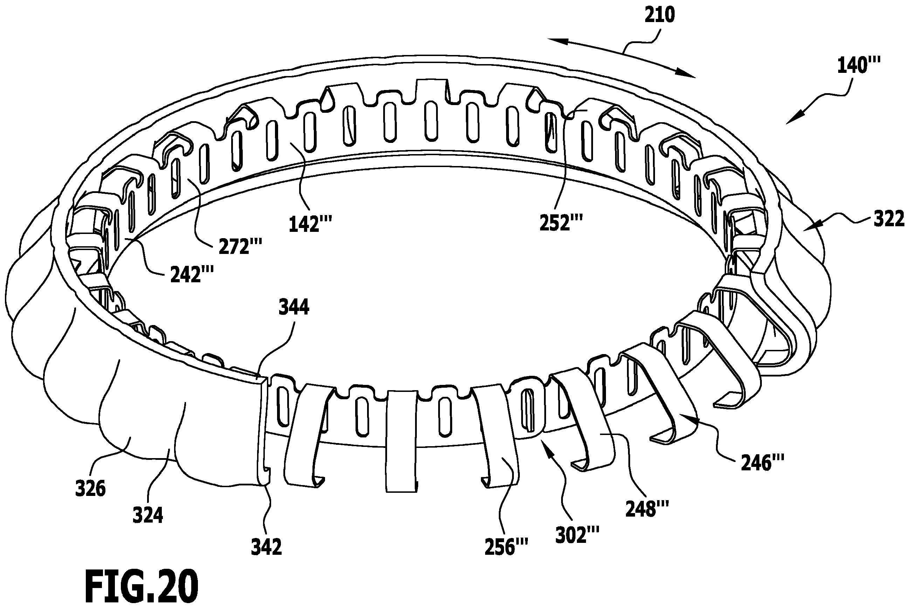

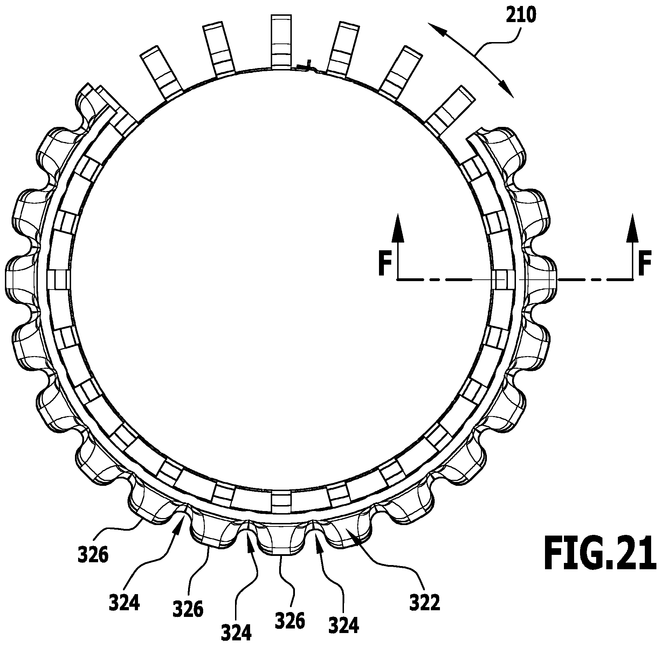

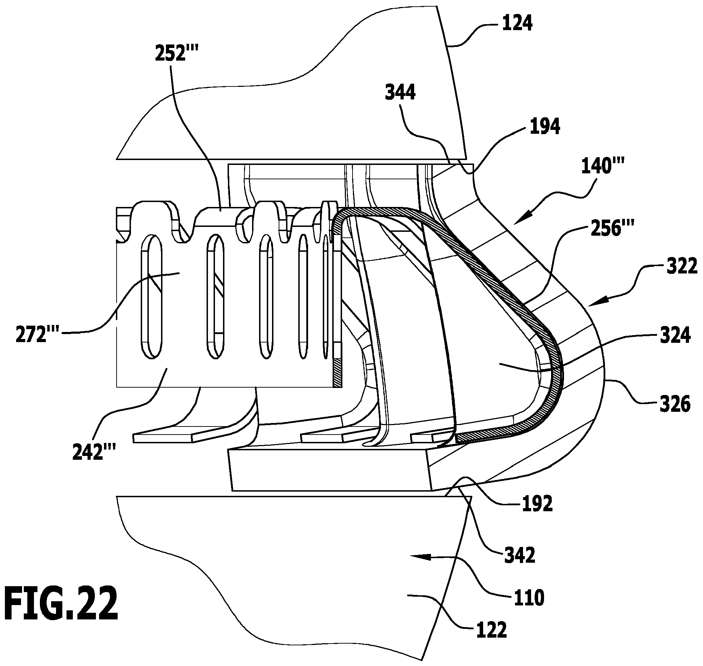

Bei einem vierten Ausführungsbeispiel des Mitnahmerings 140"', dargestellt in den Fig. 20 bis 22, basiert ebenfalls im Prinzip auf dem zweiten und dritten Ausführungsbeispiel, mit dem Unterschied, dass auf die Mitnahmeelemente 246'" und insbesondere die Zungen 248'" von einem Mantel 322 aus einem Elastomermaterial umschlossen der insbesondere auf den jeweiligen Mitnahmebereichen 256'" der einzelnen Zungen 248'" aufliegt und dabei sämtliche Mitnahmeelemente 246 des Mitnahmerings 140'" bezogen auf die Mittelachse 44 radial außenliegend umgibt.

Beispielsweise ist der Mantel 322 so geformt, dass er den Mitnahmebereich 256'" der jeweiligen Zunge 248'" jeweils zwischen den Mitnahmebereichen 256'" liegenden Einbuchtungen 324 aufnimmt, wobei die Einbuchtungen 324 sich von einer Außenkontur 326 des Mantels 322 im Bereich der Mitnahmebereiche 256'" faltenähnlich oder schlingenähnlich zwischen die Mitnahmebereiche 256'" hinein erstrecken.

Bei dem dargestellten Ausführungsbeispiel reichen die Einbuchtungen 324 jedoch nicht bis zu den Zungenansätzen 252'" sondern enden in einem radialen Abstand von diesen, so dass der Mantel 322 aufgrund seiner Elastizität der Bewegung der Mitnahmebereiche 256'" in radialer Richtung zur Mittelachse 44 folgen kann.

Insbesondere ist dabei bei einer Variante vorgesehen, dass der Mantel 322 auch jeweils an den Mitnahmebereichen 256'" der Mitnahmeelemente 246'" der Mitnahmeelemente 246'" anhaftet.

Somit geht der Mantel 322 bereits aufgrund seiner Formgebung eine drehfeste formschlüssige Verbindung mit der Gesamtheit der Mitnahmeelemente 246 ein und lässt sich beispielsweise aufgrund seiner Elastizität nach einem Schließen des Verschlusses 302'" auf die Mitnahmeelemente 246'" des Mitnahmerings 140'" aufziehen.

Der Mitnahmering 140'" ist somit hinsichtlich seiner Elastizität in radialer Richtung zur Mittelachse 44 durch die elastischen Eigenschaften der an dem Trägerkörper 142 angeordneten Mitnahmeelemente 246 geprägt, jedoch hinsichtlich seines Kraftschlusses mit der jeweiligen Innenkontur, beispielsweise der Innenkontur der Zugkugelkupplung 82, durch die Eigenschaften des Materials des Mantels 322.

Insbesondere ist der Mantel 322 so ausgebildet, dass er auf den konvexen Mintnahmebereichen 256'" der Mitnahmeelemente 246'" aufliegt und durch deren konvexe Form auch in Richtung parallel zur Mittelachse 44 fixiert ist.

Ferner erstreckt sich beispielsweise der Mantel 322 insbesondere in Richtung zur oder sogar bis zur Nutwand 192 und mit einem zweiten gegenüberliegenden Randbereich 344 in Richtung zur oder sogar bis zur Nutwand 194 und schützt somit die Nut 146 vor eindringendem Schmutz.

Im Übrigen sind diejenigen Elemente des vierten Ausführungsbeispiels, die mit denen der voranstehenden Ausführungsbeispiele identisch sind, mit denselben Bezugszeichen versehen, so dass hinsichtlich der Beschreibung derselben vollinhaltlich auf die Ausführungen zu den voranstehenden Ausführungsbeispielen Bezug genommen werden kann.

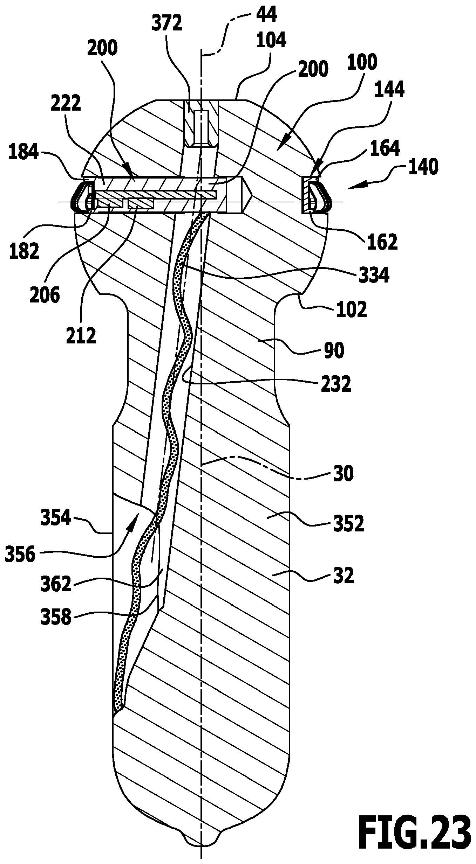

Bei einem fünften Ausführungsbeispiel einer erfindungsgemäßen Anhängekupplung, dargestellt in Fig. 23, verläuft der Leitungskanal 232 in diesem Fall geringfügig schräg zur Längsmittelebene 30, und zwar beginnend an der oberen Endfläche 104 durch den gesamten Kugelkörper 100 hindurch und auch durch den Kugelansatz 19 hindurch bis in einen den Kugelansatz tragenden Endbereich 352 des Kugelhalses 32, welcher mit einer sich ausgehend von einer Längsseite 354 des Endbereichs in diesen hineinerstreckenden Vertiefung 356 versehen ist.

Der Leitungskanal 232 mündet somit in einen Bodenbereich 358 der Vertiefung 356 und bildet in diesem eine Zugangsöffnung 362, über welche der Leitungskanal ausgehend von der Vertiefung 356 zugänglich ist.

Somit besteht die Möglichkeit, von dem Sensoraufnahmegehäuse 200 ausgehend eine elektrische Leitung 364 durch den Leitungskanal 252 bis in die Vertiefung 356 zu führen, im Bereich von welcher die elektrische Leitung 334 dann durch die Zugangsöffnung 362 in die Vertiefung 356 übertreten kann und dann entweder längs der Vertiefung 356 oder längs einer Außenseite des Kugelhalses weiter bis zu einer mit der Sensoreinheit 202 kommunizierenden Schaltung geführt werden.

Zur Vermeidung von Verschmutzungen des Leitungskanals 232 ist dieser in seinem an die obere Endfläche 104 angrenzenden Endbereich mit einem Stopfen 372 verschlossen.

Im Übrigen ist das fünfte Ausführungsbeispiel hinsichtlich derjenigen Teile, die mit dem der voranstehenden Ausführungsbeispiele identisch sind, mit denselben Bezugszeichen versehen, so dass bezüglich der Beschreibung derselben vollinhaltlich auf die Ausführungen zu den voranstehenden Ausführungsbeispielen Bezug genommen werden kann.

## Patentansprüche

1. Anhängekupplung (20) für Kraftfahrzeuge, umfassend eine an einem Heckbereich (14) des Kraftfahrzeugs (10) angeordnete Trägereinheit (22),
einen Kugelhals (32), der an einem ersten Ende (34) eine Kupplungskugel (40) trägt, und der mit einem zweiten Ende an der Trägereinheit (22) gehalten ist,
eine um eine Mittelachse (44) der Kupplungskugel (40) umlaufende Nut (146), in der ein Mitnahmering (140) drehbar um die Mittelachse (44) geführt ist, und eine in der Kupplungskugel (40) angeordnete und Drehpositionen des Mitnahmerings (140) erfassende Sensoreinheit (202),
wobei der Mitnahmering (140) einen Trägerkörper (142) aufweist und wobei an dem Trägerkörper (142) Mitnahmeelemente (246) gehalten sind, die über eine durch die Kupplungskugeloberfläche (110) definierte geometrische Kugelfläche (144) radial zur Mittelachse (44) nach außen überstehen, **dadurch gekennzeichnet, dass** die Mitnahmeelemente (246) Zungen (248) umfassen und dass die Zungen (248) einen mit dem Trägerkörper (142) verbundenen Zungenansatz (252) und ein Zungenende (254) aufweisen, zu welchem sich die Zungen (248) ausgehend von dem Zungenansatz (252) erstrecken, dass die Zungen (248) radial zur Mittelachse (44) elastisch bewegbare Mitnahmeflächen aufweisen, und dass insbesondere die Zungen (248) ausgehend von dem Trägerkörper (142) sich mit einer in radialer Richtung zur Mittelachse (44) verlaufenden Komponente erstrecken, dass die Mitnahmeelemente (246) einstückig an den Trägerkörper (142) angeformt sind, dass die Mitnahmeelemente und der Trägerkörper (142) aus Metall ausgebildet sind.

2. Anhängekupplung nach Anspruch 1, **dadurch gekennzeichnet, dass** der Trägerkörper (142) als um die Mittelachse (44) umlaufender Ringkörper ausgebildet ist, dass insbesondere der Trägerkörper (142) im betriebsfähig montierten Zustand als in einer Umlaufrichtung (210) um die Mittelachse (44) geschlossen umlaufender Ringkörper ausgebildet ist, dass insbesondere der Trägerkörper (142) als zwei Ringenden (262, 264) aufweisender, durch einen Verschluss (302) in der Umlaufrichtung (210) schließbarer Ringkörper ausgebildet ist.

3. Anhängekupplung nach einem der voranstehenden Ansprüche, **dadurch gekennzeichnet, dass** die Sensoreinheit (202) in einem Kugelkörper (100) der Kupplungskugel (40) in einer radial innerhalb der Nut (146) angeordneten Ausnehmung (220) angeordnet ist und dass die Ausnehmung (220) in Richtung parallel zu der Mittelachse (44) der Kupplungskugel (40) dieselbe oder eine geringere Ausdehnung aufweist als die Nut (146).

4. Anhängekupplung nach Anspruch 3, **dadurch gekennzeichnet, dass** die Ausnehmung (220) sich in dem Kugelkörper (100) quer zur Mittelachse (44) erstreckt.

5. Anhängekupplung nach Anspruch 3 oder 4, **dadurch gekennzeichnet, dass** die Ausnehmung (220) im Anschluss an die Nut (146) in den Kugelkörper (100) eindringt, dass insbesondere die Ausnehmung (220) in einen die Kupplungskugel (40) durchsetzenden Leitungskanal (232) übergeht, dass insbesondere der Leitungskanal (232) einen innerhalb des Kugelkörpers (100) ungefähr parallel zur Mittelachse (44) verlaufenden Kanalabschnitt aufweist, dass insbesondere der Leitungskanal (232) zumindest einen Teil der Kupplungskugel (40), einen Kugelansatz (90) und einen Teilbereich des Kugelhalses (32) durchsetzt, dass insbesondere der Leitungskanal (232) im Bereich des Kugelhalses (32) eine Zugangsöffnung (332) aufweist.

6. Anhängekupplung nach einem der voranstehenden Ansprüche, **dadurch gekennzeichnet, dass** ein Kugelkörper (100) der Kupplungskugel (40) einstückig ausgebildet ist.

7. Anhängekupplung nach einem der voranstehenden Ansprüche, **dadurch gekennzeichnet, dass** der Mitnahmering (140) mit einer Abtaststruktur (270) versehen ist, die von der im Kugelkörper (100) angeordneten Sensoreinheit (202) abtastbar ist.

8. Anhängekupplung nach Anspruch 7, **dadurch gekennzeichnet, dass** die Abtaststruktur (270) an einem Trägerkörper (142) des Mitnahmerings (140) angeordnet ist.

9. Anhängekupplung nach Anspruch 7 oder 8, **dadurch gekennzeichnet, dass** die Abtaststruktur (270) aufeinanderfolgende Bereiche (272, 274) aufweist, die ein Magnetfeld unterschiedlich stark beeinflussen, dass insbesondere die aufeinanderfolgenden Bereiche (272, 274) unterschiedlich stark magnetisierbar sind.

10. Anhängekupplung nach einem der Ansprüche 3 bis 9, **dadurch gekennzeichnet, dass** die Abtaststruktur (270) als alternierende, beispielsweise in der Umlaufrichtung (210) periodische Struktur ausgebildet ist, die insbesondere um die Mittelachse (44) in der Umlaufrichtung (210) aufeinanderfolgende Materialstege (272) und Materialsteglücken (274) aufweist, dass insbesondere die Abtaststruktur (270) um die Mittelachse (44) umlaufend aufeinanderfolgende Stege (272) und Aussparungen (274) aufweist.

11. Anhängekupplung nach einem der Ansprüche 3 bis 10, **dadurch gekennzeichnet, dass** die Sensoreinheit (202) bezogen auf die Mittelachse (44) radial innerhalb der Abtaststruktur (270) in dem Kugelkörper (100) angeordnet ist, dass insbesondere die Sensoreinheit (202) eine mit einer Komponente radial zur Mittelachse (44) verlaufende und auf die Abtaststruktur (270) gerichtete Detektionsrichtung (D) aufweist.

12. Anhängekupplung nach einem der voranstehenden Ansprüche, **dadurch gekennzeichnet, dass** die Sensoreinheit (202) zur Abtastung der Drehstellungen des Mitnahmerings (140) eine magnetisch vorgespannte Sensoranordnung (206, 208, 212) aufweist, mit welcher die Drehstellungen einer Abtaststruktur (270) des Mitnahmerings (140) erfasst werden, die in definierten Abständen aufeinanderfolgend angeordnete erste (272) und zweite (274) Bereiche aufweist, wobei die ersten (272) und zweiten (274) Bereiche bei Wechselwirkung mit einem zur magnetischen Vorspannung dienenden Magnetfeld der Sensoreinheit (202) dieses Magnetfeld unterschiedlich stark beeinflussen, dass insbesondere die ersten (272) und zweiten (274) Bereiche der Abtaststruktur (270) an dem Trägerkörper (142) ausgebildet sind, dass insbesondere die ersten (272) und zweiten (274) Bereiche der Abtaststruktur (270) einstückig an den Trägerkörper (142) angeformt sind.

## Claims

1. Trailer coupling (20) for motor vehicles, comprising a carrier unit (22) arranged at a rear section (14) of the motor vehicle (10),
a ball neck (32) bearing a coupling ball (40) at a first end (34) and being held on the carrier unit (22) at a second end,
a groove (146) extending around a central axis (44) of the coupling ball (40), an entraining ring (140) being guided in said groove for rotation about the central axis (44), and a sensor unit (202) arranged in the coupling ball (40) and detecting rotary positions of the entraining ring (140),
wherein the entraining ring (140) has a carrier member (142) and wherein entraining elements (246) are held on the carrier member (142) and protrude outwardly and radially to the central axis (44) beyond a geometric ball surface (144) defined by the outer surface (110) of the coupling ball,
**characterized in that** the entraining elements (246) comprise tongues (248) and that the tongues (248) have a tongue attachment (252) connected to the carrier member (142) and a tongue end (254), the tongues (248) extending to said tongue end from the tongue attachment (252), that the tongues (248) have entraining surfaces movable elastically in a radial direction relative to the central axis (44), and that in particular proceeding from the carrier member (142) the tongues (248) extend with a component running in a radial direction relative to the central axis (44), that the entraining elements (246) are integrally formed on the carrier member (142), that the entraining elements and the carrier member (142) are formed from metal.

2. Trailer coupling as defined in claim 1, **characterized in that** the carrier member (142) is designed as a ring member extending around the central axis (44), that in particular in the state mounted for operation the carrier member (142) is designed as a ring member extending around the central axis (44) in a circumferential direction (210) in a closed manner, that the carrier member (142) is designed, in particular, as a ring member having two ring ends (262, 264) and being closable in the circumferential direction (210) by a closure member (302).

3. Trailer coupling as defined in either one of the preceding claims, **characterized in that** the sensor unit (202) is arranged in a ball member (100) of the coupling ball (40) in a recess (220) arranged radially within the groove (146) and that the recess (220) has the same or a smaller extension in the direction parallel to the central axis (44) of the coupling ball (40) than the groove (146).

4. Trailer coupling as defined in claim 3, **characterized in that** the recess (220) extends in the ball member (100) transversely to the central axis (44).

5. Trailer coupling as defined in claim 3 or 4, **characterized in that** the recess (220) penetrates the ball member (100) subsequent to the groove (146), that in particular the recess (220) merges into a raceway (232) passing through the coupling ball (40), that in particular the raceway (232) has a channel section extending within the ball member (100) approximately parallel to the central axis (44), that in particular the raceway (232) passes at least through part of the coupling ball (40), a ball attachment (90) and a section of the ball neck (32), that in particular the raceway (232) has an access opening (332) in the region of the ball neck (32).

6. Trailer coupling as defined in any one of the preceding claims, **characterized in that** a ball member (100) of the coupling ball (40) is designed in one piece.

7. Trailer coupling as defined in any one of the preceding claims, **characterized in that** the entraining ring (140) is provided with a scannable structure (270) detectable by the sensor unit (202) arranged in the ball member (100).

8. Trailer coupling as defined in claim 7, **characterized in that** the scannable structure (270) is arranged on a carrier member (142) of the entraining ring (140).

9. Trailer coupling as defined in claim 7 or 8, **characterized in that** the scannable structure (270) has successive areas (272, 274) influencing a magnetic field to varying degrees, that in particular the successive areas (272, 274) are magnetisable to varying degrees.

10. Trailer coupling as defined in any one of claims 3 to 9, **characterized in that** the scannable structure (270) is designed as an alternating, for example, periodic structure in the circumferential direction (210) and has, in particular, material webs (272) and material web gaps (274) following one another in the circumferential direction (210) around the central axis (44), that in particular the scannable structure (270) has webs (272) and slots (274) following one another around the central axis (44).

11. Trailer coupling as defined in any one of claims 3 to 10, **characterized in that** the sensor unit (202) is arranged in the ball member (100) radially within the scannable structure (270) in relation to the central axis (44), that in particular the sensor unit (202) has a direction of detection (D) extending with a component radially to the central axis (44) and being directed onto the scannable structure (270).

12. Trailer coupling as defined in any one of the preceding claims, **characterized in that** for detecting the rotary positions of the entraining ring (140) the sensor unit (202) has a magnetically biased sensor array (206, 208, 212), the rotary positions of a scannable structure (270) of the entraining ring (140) being detected with said sensor array, said structure having first (272) and second (274) areas arranged to follow one another at defined distances, wherein the first (272) and second (274) areas influence the magnetic field of the sensor unit (202) to varying degrees during interaction with said magnetic field serving the purpose of magnetic biasing, that in particular the first (272) and second (274) areas of the scannable structure (270) are formed on the carrier member (142), that in particular the first (272) and second (274) areas of the scannable structure (270) are integrally formed in one piece on the carrier member (142).

## Revendications

1. Attelage de remorque (20) pour véhicules automobiles comprenant
une unité de support (22) agencée contre une région arrière (14) du véhicule automobile (10),
un col de rotule (32) qui au niveau d'une première extrémité (34) porte une rotule d'attelage (40) et qui avec une seconde extrémité est maintenu contre l'unité de support (22),
une rainure (146) tournant autour d'un axe central (44) de la rotule d'attelage (40) dans laquelle rainure une bague entraîneuse (140) est guidée en rotation autour de l'axe central (44), et une unité de capteur (202) agencée dans la rotule d'attelage (40) et saisissant des positions de rotation de la bague entraîneuse (140),
dans lequel la bague entraîneuse (140) présente un corps de support (142) et dans lequel sont maintenus contre le corps de support (142) des éléments d'entraînement (246) qui font saillie, de façon radiale par rapport à l'axe central (44), vers l'extérieur par-dessus une surface géométrique de rotule définie par la surface de rotule d'attelage (110), **caractérisé en ce que** les éléments d'entraînement (246) comprennent des languettes (248) et **en ce que** les languettes (248) présentent un début de languette (252) relié au corps de support (142) et une extrémité de languette (254) vers laquelle s'étendent les languettes (248) depuis le début de languette (252), **en ce que** les languettes (248) présentent, de façon radiale par rapport à l'axe central (44), des surfaces d'entraînement élastiquement mobiles, et **en ce qu'**en particulier les languettes (248) s'étendent depuis le corps de support (142) avec une composante se déroulant dans une direction radiale par rapport à l'axe central (44), **en ce que** les éléments d'entraînement (246) sont façonnés d'un seul tenant contre le corps de support (142), **en ce que** les éléments d'entraînement (246) et le corps de support (142) sont conçus en métal.

2. Attelage de remorque selon la revendication 1, **caractérisé en ce que** le corps de support (142) est conçu en tant que corps de bague tournant autour de l'axe central (44), **en ce qu'**en particulier le corps de support (142) est conçu, à l'état monté de façon opérationnelle, en tant que corps de bague fermé tournant dans un sens de rotation (210) autour de l'axe central (44), **en ce qu'**en particulier le corps de support (142) est conçu en tant que corps de bague présentant deux extrémités de bague (262, 264) et pouvant être fermé par un obturateur (302) dans le sens de rotation (210).

3. Attelage de remorque selon l'une des revendications précédentes, **caractérisé en ce que** l'unité de capteur (202) est agencée dans un corps de rotule (100) de la rotule d'attelage (40) dans un évidement (220) agencé de façon radiale à l'intérieur de la rainure (146) et **en ce que** l'évidement (220) présente, dans une direction parallèle à l'axe central (44) de la rotule d'attelage (40), une extension identique ou inférieure à la rainure (146).

4. Attelage de remorque selon la revendication 3, **caractérisé en ce que** l'évidement (220) s'étend dans le corps de rotule (100) transversalement à l'axe central (44).

5. Attelage de remorque selon la revendication 3 ou 4, **caractérisé en ce que** l'évidement (220) pénètre le corps de rotule (100) dans le raccordement à la rainure (146), **en ce qu'**en particulier l'évidement (220) passe par un canal de guidage (232) faisant cheminer la rotule d'attelage (40), **en ce qu'**en particulier le canal de guidage (232) présente un tronçon de canal se déroulant environ parallèlement à l'axe central (44) à l'intérieur du corps de rotule (100), **en ce qu'**en particulier le canal de guidage (232) fait cheminer au moins une partie de la rotule d'attelage (40), un début de rotule (90) et une région partielle du col de rotule (32), **en ce qu'**en particulier le canal de guidage (232) présente un orifice d'accès (332) dans la région du col de rotule (32).

6. Attelage de remorque selon l'une des revendications précédentes, **caractérisé en ce qu'**un corps de rotule (100) de la rotule d'attelage (40) est conçu d'un seul tenant.

7. Attelage de remorque selon l'une des revendications précédentes, **caractérisé en ce que** la bague entraîneuse (140) est dotée d'une structure de détection (270) qui peut être détectée par l'unité de capteur (202) agencée dans le corps de rotule (100).

8. Attelage de remorque selon la revendication 7, **caractérisé en ce que** la structure de détection (270) est agencée contre un corps de support (142) de la bague entraîneuse (140).

9. Attelage de remorque selon la revendication 7 ou 8, **caractérisé en ce que** la structure de détection (270) présente des régions se succédant (272, 274) qui influent fortement sur un champ magnétique de façon différenciée, **en ce qu'**en particulier les régions se succédant (272, 274) peuvent être fortement magnétisées de façon différenciée.

10. Attelage de remorque selon l'une des revendications 3 à 9, **caractérisé en ce que** la structure de détection (270) est conçue en tant que structure périodique alternante, par exemple dans le sens de rotation (210), qui présente en particulier autour de l'axe central (44) dans le sens de rotation (210) des traverses matérielles (272) et des niches de traverses matérielles (274) se succédant, **en ce qu'**en particulier la structure de détection (270) présente tournant autour de l'axe central (44) des traverses (272) et des renfoncements (274) se succédant.

11. Attelage de remorque selon l'une des revendications 3 à 10, **caractérisé en ce que** l'unité de capteur (202) est agencée dans le corps de rotule (100) de façon radiale par rapport à l'axe central (44) à l'intérieur de la structure de détection (270), **en ce qu'**en particulier l'unité de capteur (202) présente une direction de détection (D) avec une composante se déroulant dans une direction radiale par rapport à l'axe central (44) et orientée vers la structure de détection (270).

12. Attelage de remorque selon l'une des revendications précédentes, **caractérisé en ce que** l'unité de capteur (202) présente un agencement de capteur (206, 208, 212) magnétiquement précontraint destiné à détecter les positions de rotation de la bague entraîneuse (140), avec lequel agencement de capteur les positions de rotation d'une structure de détection (270) de la bague entraîneuse (140) sont saisies, lequel agencement présente à des intervalles définis des premières (272) et secondes (274) régions agencées de façon à se succéder, dans lequel les premières (272) et secondes (274) régions, lors d'une interaction avec le champ magnétique servant à la précontrainte magnétique de l'unité de capteur (202), influent fortement sur ce champ magnétique de façon différenciée, **en ce qu'**en particulier les premières (272) et secondes (274) régions de la structure de détection (270) sont conçues contre le corps de support (142), **en ce qu'**en particulier les premières (272) et secondes (274) régions de la structure de détection (270) sont façonnées d'un seul tenant contre le corps de support (142).
